# EUROPEAN PATENT APPLICATION

(11) **EP 4 848 112 A1**
(43) Date of publication of application: **02.12.2026**
(21) Application number: 24923269.5
(22) Date of filing: 28.08.2024
(51) Int. Cl.: G06F 16/957

(54) **SEARCH RESULT GENERATION METHOD AND APPARATUS, AND DEVICE AND STORAGE MEDIUM**

(30) Priority: 06.02.2024 CN 202410173786
(71) Applicant: Huawei Technologies Co., Ltd., Shenzhen, Guangdong 518129 (CN)
(72) Inventor: LUO, Jiajun, Shenzhen, Guangdong 518129 (CN); LIU, Xiaobo, Shenzhen, Guangdong 518129 (CN); WANG, Fangshan, Shenzhen, Guangdong 518129 (CN); ZHANG, Peijing, Shenzhen, Guangdong 518129 (CN); KANG, Sichen, Shenzhen, Guangdong 518129 (CN); ZHONG, Shirou, Shenzhen, Guangdong 518129 (CN)
(74) Representative: Huawei European IPR
(86) International application number: PCT/CN2024/115078
(87) International publication number: WO 2025/167059

(57) **Abstract**

The present invention discloses a search result generation method and apparatus, a device, and a storage medium, to improve accuracy of summary computing. In this application, at least one webpage corresponding to a search term is obtained; a first text corresponding to the search term is generated, where the first text is a text associated with the search term; for each webpage, a summary of the webpage is extracted from a body text of the webpage based on the search term and the first text; and a search result of the search term is generated based on the summary of the webpage. In this application, the first text is obtained based on the search term, thereby extending the search term and making the search term more complete. The summary is determined based on both the search term and the first text, which resolves a problem of poor summarization occurring when the search term is incomplete or has a question-answering intent. In this application, when the search result is displayed, a keyword corresponding to the search term in the summary and a keyword corresponding to the first text may be displayed with emphasis, so that the user can intuitively understand the search result.

## Description

This application claims priority to Chinese Patent Application No. 202410173786.0, filed with the China National Intellectual Property Administration on February 6, 2024 and entitled "SEARCH RESULT GENERATION METHOD AND APPARATUS, AND DEVICE AND STORAGE MEDIUM", which is incorporated herein by reference in its entirety.

### TECHNICAL FIELD

The present invention relates to the field of Internet technologies, and in particular, to a search result generation method and apparatus, a device, and a storage medium.

### BACKGROUND

In the current Internet era, search engines are one of the most important and commonly used tools for people to obtain target information in the ocean of information. After a user enters a search term into a search engine to perform a search, the search engine displays multiple results. Each result shows a title, a web address, a summary, and the like. The summary enables the user to quickly understand a snippet related to the search term in webpage content of the result, thereby helping the user determine whether the result is related to the search term, whether the result is useful to the user, and whether tapping is needed.

Each webpage contains a large quantity of body sentences, and the summary is determined from the body sentences. In the current summary computing manner, a correlation between a body sentence and the search term is computed based on a keyword of the search term and keywords in the body sentences of the webpage, and body sentences most related to the search term are finally selected from the webpage content as the summary. When a search term entered by the user is complex, a summary obtained in this computing manner is unsatisfactory, and consequently the displayed search result does not conform to user intent.

### SUMMARY

An objective of the present invention is to provide a search result generation method and apparatus, a device, and a storage medium, to resolve a technical problem in the conventional technology.

According to a first aspect, an embodiment of this application provides a search result generation method, where the method includes:
obtaining at least one webpage corresponding to a search term; generating a first text corresponding to the search term, where the first text is a text associated with the search term; for each webpage, extracting a summary of the webpage from a body text of the webpage based on the search term and the first text; and generating a search result of the search term based on the summary of the webpage.

In this application, the first text is obtained based on the search term, so that the search term is extended, thereby making the search term more complete. The summary is determined based on both the search term and the first text, which resolves a problem of poor summarization occurring when the search term is incomplete or has a question-answering intent.

In some possible embodiments, extracting the summary of the webpage from the body text of the webpage based on the search term and the first text includes: separately performing word segmentation on the search term and the first text to obtain a text keyword set, where the text keyword set includes at least one keyword and a weight corresponding to each keyword; performing sentence segmentation on the body text of the webpage to obtain at least one body sentence; and determining the summary of the webpage based on a correlation between each body sentence and the keyword in the text keyword set.

In this application, the first text is added when the correlation between each body sentence of the webpage and the search term is computed, so that the search term is more complete, thereby ensuring that the summary obtained through computing better meets a user intent.

In some possible embodiments, the determining the summary of the webpage based on the correlation between each body sentence and the keyword in the text keyword set includes: performing word segmentation on each body sentence to obtain a body keyword set corresponding to each body sentence, where the body keyword set includes at least one keyword and a weight corresponding to each keyword; obtaining a correlation score between each body sentence and the search term based on the text keyword set and the body keyword set corresponding to each body sentence; and obtaining the summary corresponding to the webpage based on the correlation score corresponding to each body sentence.

In this application, the first text is added when the correlation between each body sentence of the webpage and the search term is computed, so that the search term is more complete, thereby ensuring that the summary obtained through computing better meets the user intent.

In some possible embodiments, separately performing word segmentation on the search term and the first text to obtain the text keyword set includes: performing word segmentation on the search term to obtain at least one first keyword and a weight corresponding to each first keyword; performing word segmentation on the first text to obtain at least one second keyword and a weight corresponding to each second keyword; and obtaining the text keyword set based on the first keyword, the weight corresponding to each first keyword, the second keyword, and the weight corresponding to the second keyword.

In this application, the text keyword set is constructed based on both the search term and the first text, ensuring completeness of the keyword in the obtained text keyword set, thereby ensuring accuracy of the subsequently determined summary.

In some possible embodiments, before determining the summary of the webpage based on the correlation between each body sentence and the keyword in the text keyword set, the method further includes: performing deduplication processing on the text keyword set to obtain a deduplicated text keyword set.

In this application, deduplication processing is performed on the text keyword set, so that compute resources are saved.

In some possible embodiments, before determining the summary of the webpage based on the correlation between each body sentence and the keyword in the text keyword set, the method further includes: performing normalization processing on the weight of the keyword in the text keyword set.

In some possible embodiments, performing normalization processing on the weight of the keyword in the text keyword set includes: performing, based on a preset weight ratio corresponding to the first keyword, normalization processing on a third keyword in the text keyword set to obtain a normalized weight corresponding to each third keyword in the text keyword set, where the third keyword is a keyword corresponding to the search term in the text keyword set; performing, based on a preset weight ratio corresponding to the second keyword, normalization processing on a fourth keyword included in the text keyword set to obtain a normalized weight corresponding to each fourth keyword in the text keyword set, where the fourth keyword is a keyword in the text keyword set other than the third keyword; using the normalized weight corresponding to each third keyword to update a weight corresponding to each third keyword in the text keyword set; and using the normalized weight corresponding to each fourth keyword to update a weight corresponding to each fourth keyword in the text keyword set.

In this application, the weight of the keyword is normalized, so that accuracy is further improved.

In some possible embodiments, performing, based on the preset weight ratio corresponding to the first keyword, normalization processing on the third keyword in the text keyword set includes: performing normalization processing on the third keyword in the text keyword set based on the preset weight ratio corresponding to the first keyword and a first normalization formula. The first normalization formula includes: ${qw}_{i}^{′} = α ∗ \left(\frac{{qw}_{i}}{{\sum }_{1}^{m} {qw}_{i}}\right)$,
where ${qw}_{i}^{′}$ is a normalized weight of an *i*^{th} third keyword in the text keyword set, α is the preset weight ratio corresponding to the first keyword, *qwᵢ* is a weight corresponding to the *i*^{th} third keyword in the text keyword set, and m is a quantity of third keywords in the text keyword set.

In some possible embodiments, performing, based on the preset weight ratio corresponding to the second keyword, normalization processing on the fourth keyword included in the text keyword set includes: performing normalization processing on the fourth keyword in the text keyword set based on the preset weight ratio corresponding to the second keyword and a second normalization formula. The second normalization formula includes: ${tw}_{i}^{′} = \left(1-α\right) ∗ \left(\frac{{tw}_{i}}{{\sum }_{1}^{n} {tw}_{i}}\right)$ ,
where ${tw}_{i}^{′}$ is a normalized weight of an *i*^{th} fourth keyword in the text keyword set, 1 - α is the preset weight ratio corresponding to the second keyword, *twᵢ* is a weight corresponding to the *i*^{th} fourth keyword in the text keyword set, and n is a quantity of fourth keywords in the text keyword set.

In some possible embodiments, obtaining the correlation score between each body sentence and the search term based on the text keyword set and the body keyword set corresponding to each body sentence includes: for the body keyword set corresponding to each body sentence, performing: determining a quantity of same keywords between the body keyword set and the text keyword set; and obtaining, based on the quantity of same keywords, the correlation score between the body sentence corresponding to the body keyword set and the search term.

In some possible embodiments, obtaining, based on the quantity of same keywords, the correlation score between the body sentence corresponding to the body keyword set and the search term includes: obtaining, based on the quantity of same keywords and a correlation formula, the correlation score between the body sentence corresponding to the body keyword set and the search term. The correlation formula includes: ${revelance}_{s} = {\sum }_{1}^{l} {m}_{i} ∗ {s}_{i}$*,* where revelance*ₛ* is the correlation score between the body sentence corresponding to the body keyword set and the search term, *l* is the quantity of same keywords between the body keyword set and the text keyword set, *mᵢ* is a weight of an *i*^{th} keyword in the text keyword set, and *sᵢ* is a weight of an *i*^{th} keyword in the body keyword set.

In some possible embodiments, before generating the search result of the search term based on the summary of the webpage, the method further includes: determining, based on the text keyword set, a first keyword and a second keyword in the summary of the webpage, where the first keyword is a keyword obtained by performing word segmentation on the search term, and the second keyword is a keyword obtained by performing word segmentation on the first text; and sending the first keyword and the second keyword in the summary of the webpage to a terminal device.

In some possible embodiments, the method further includes: determining a target keyword in response to a selection operation on the search result; updating the search term based on the target keyword to obtain an updated search term; and based on the updated search term, returning to perform the step of obtaining at least one webpage corresponding to the search term.

In this application, the user may interact with the keyword in the summary. After it is determined that the user has selected a search result, the target keyword is determined and a secondary search is performed again, thereby further ensuring accuracy of the search.

In some possible embodiments, the method further includes: obtaining a modified first text in response to a modification operation on the first text; and based on the modified text, returning to perform the step of extracting the summary of the webpage from the body text of the webpage based on the search term and the first text.

In this application, the user may interact with the first text, and the secondary search is performed again based on modification of the first text by the user, thereby ensuring accuracy of the search.

In some possible embodiments, generating the first text corresponding to the search term includes: entering the search term into an artificial intelligence generated content AIGC system, and obtaining the first text output by the AIGC system.

In this application, the AIGC system is used to determine the first text corresponding to the search term, and the first text is used to supplement the search term, thereby ensuring accuracy of the obtained summary.

According to a second aspect, an embodiment of this application further provides a display method, where the method includes:
displaying a first interface, where the first interface includes a first control; obtaining a search term entered by a user in the first control; obtaining a search result based on the search term, where the search result includes a summary of at least one webpage, the summary of each webpage is extracted from a body text of the webpage based on the search term and a first text, the first text is generated based on the search term, and the first text is a text associated with the search term; and displaying the search result in a second interface.

In this application, the first text is obtained based on the search term, so that the search term is extended, thereby making the search term more complete. The summary is determined based on both the search term and the first text, so that the displayed summary further conforms to a user intent. This resolves a problem of poor summarization occurring when the search term is incomplete or has a question-answering intent.

In some possible embodiments, the method further includes: displaying a second control in the second interface; and detecting a selection operation on the second control and displaying the first text in a third interface.

In this application, the second control is set in the second interface, so that the user can intuitively view the first text, thereby improving user experience.

In some possible embodiments, after displaying the first text in the third interface, the method further includes: obtaining a modified first text in response to a modification operation on the first text; obtaining an updated search result based on the search term and the modified first text, where the updated search result includes a summary of at least one webpage, and the summary of each webpage is extracted from a body text of the webpage based on the search term and the modified first text; and displaying the updated search result in the second interface.

In this application, the user may interact with the first text, and a secondary search is performed again based on modification of the first text by the user, thereby ensuring accuracy of the search.

In some possible embodiments, displaying the search result in the second interface includes: performing, in the second interface, first emphasis display on a first keyword in the summary corresponding to each webpage, and performing second emphasis display on a second keyword in the summary corresponding to each webpage, where the first keyword is a keyword obtained by performing word segmentation on the search term, and the second keyword is a keyword obtained by performing word segmentation on the first text.

In this application, different emphasis displays are respectively performed on the first keyword and the second keyword, so that the user can intuitively view the search result, thereby improving user experience.

In some possible embodiments, the first emphasis display includes: displaying in red, highlighting, displaying with a bottom wavy line, and/or displaying in bold. The second emphasis display includes: displaying in red, highlighting, displaying with a bottom wavy line, and/or displaying in bold. The first emphasis display is different from the second emphasis display.

In this application, the first emphasis display is different from the second emphasis display, so that the user can distinguish the first keyword from the second keyword.

In some possible embodiments, the method further includes: determining a target keyword in response to a selection operation on the search result; updating the search term based on the target keyword to obtain an updated search term; and obtaining an updated search result based on the updated search term, where the updated search result includes a summary of at least one webpage, the summary of each webpage is extracted from a body text of the webpage based on the updated search term and a second text, the second text is generated based on the updated search term, and the second text is a text associated with the updated search term; and displaying the updated search result in the second interface.

In this application, the user may interact with the keyword in the summary. After it is determined that the user has selected the search result, the target keyword is determined and the secondary search is performed again, thereby further ensuring accuracy of the search.

According to a third aspect, an embodiment of this application further provides a search result generation apparatus, where the apparatus includes:
a webpage obtaining module, configured to obtain at least one webpage corresponding to a search term;
a text determining module, configured to generate a first text corresponding to the search term, where the first text is a text associated with the search term;
a summary obtaining module, configured to extract, for each webpage, a summary of the webpage from a body text of the webpage based on the search term and the first text; and
a search result generating module, configured to generate a search result of the search term based on the summary of the webpage.

In some possible embodiments, the summary obtaining module is specifically configured to separately perform word segmentation on the search term and the first text to obtain a text keyword set, where the text keyword set includes at least one keyword and a weight corresponding to each keyword; perform sentence segmentation on the body text of the webpage to obtain at least one body sentence; and determine the summary of the webpage based on a correlation between each body sentence and the keyword in the text keyword set.

In some possible embodiments, the summary obtaining module is specifically configured to perform word segmentation on each body sentence to obtain a body keyword set corresponding to each body sentence, where the body keyword set includes at least one keyword and a weight corresponding to each keyword; obtain a correlation score between each body sentence and the search term based on the text keyword set and the body keyword set corresponding to each body sentence; and obtain the summary corresponding to the webpage based on the correlation score corresponding to each body sentence.

In some possible embodiments, the summary obtaining module is specifically configured to perform word segmentation on the search term to obtain at least one first keyword and a weight corresponding to each first keyword; perform word segmentation on the first text to obtain at least one second keyword and a weight corresponding to each second keyword; and obtain the text keyword set based on the first keyword, the weight corresponding to each first keyword, the second keyword, and the weight corresponding to the second keyword.

In some possible embodiments, the summary obtaining module is further configured to perform deduplication processing on the text keyword set to obtain a deduplicated text keyword set.

In some possible embodiments, the summary obtaining module is further configured to perform normalization processing on the weight of the keyword in the text keyword set.

In some possible embodiments, the summary obtaining module is further configured to: performing normalization processing on the weight of the keyword in the text keyword set includes performing, based on a preset weight ratio corresponding to the first keyword, normalization processing on a third keyword in the text keyword set to obtain a normalized weight corresponding to each third keyword in the text keyword set, where the third keyword is a keyword corresponding to the search term in the text keyword set; performing, based on a preset weight ratio corresponding to the second keyword, normalization processing on a fourth keyword included in the text keyword set to obtain a normalized weight corresponding to each fourth keyword in the text keyword set, where the fourth keyword is a keyword in the text keyword set other than the third keyword; using the normalized weight corresponding to each third keyword to update a weight corresponding to each third keyword in the text keyword set; and using the normalized weight corresponding to each fourth keyword to update a weight corresponding to each fourth keyword in the text keyword set.

In some possible embodiments, the summary obtaining module is specifically configured to perform normalization processing on the third keyword in the text keyword set based on the preset weight ratio corresponding to the first keyword and a first normalization formula. The first normalization formula includes: ${qw}_{i}^{′} = α ∗ \left(\frac{{qw}_{i}}{{\sum }_{1}^{m} {qw}_{i}}\right)$,
where ${qw}_{i}^{′}$ is a normalized weight of an *i*^{th} third keyword in the text keyword set, α is the preset weight ratio corresponding to the first keyword, *qwᵢ* is a weight corresponding to the *i*^{th} third keyword in the text keyword set, and *m* is a quantity of third keywords in the text keyword set.

In some possible embodiments, the summary obtaining module is specifically configured to perform normalization processing on the fourth keyword in the text keyword set based on the preset weight ratio corresponding to the second keyword and a second normalization formula. The second normalization formula includes: ${tw}_{i}^{′} = \left(1-α\right) ∗ \left(\frac{{tw}_{i}}{{\sum }_{1}^{n} {tw}_{i}}\right)$,
where ${tw}_{i}^{′}$ is a normalized weight of an *i*^{th} fourth keyword in the text keyword set, 1 - α is the preset weight ratio corresponding to the second keyword, *twᵢ* is a weight corresponding to the *i*^{th} fourth keyword in the text keyword set, and *n* is a quantity of fourth keywords in the text keyword set.

In some possible embodiments, the summary obtaining module is specifically configured to perform for the body keyword set corresponding to each body sentence: determining a quantity of same keywords between the body keyword set and the text keyword set; and obtaining, based on the quantity of same keywords, the correlation score between the body sentence corresponding to the body keyword set and the search term.

In some possible embodiments, the summary obtaining module is specifically configured to obtain, based on the quantity of same keywords and a correlation formula, the correlation score between the body sentence corresponding to the body keyword set and the search term. The correlation formula includes: ${revelance}_{s} = {\sum }_{1}^{l} {m}_{i} ∗ {s}_{i}$, where revelance*ₛ* is the correlation score between the body sentence corresponding to the body keyword set and the search term, *l* is the quantity of same keywords between the body keyword set and the text keyword set, *mᵢ* is a weight of an *i*^{th} keyword in the text keyword set, and *sᵢ* is a weight of an *i*^{th} keyword in the body keyword set.

In some possible embodiments, the summary obtaining module is further configured to determine, based on the text keyword set, a first keyword and a second keyword in the summary of the webpage, where the first keyword is a keyword obtained by performing word segmentation on the search term, and the second keyword is a keyword obtained by performing word segmentation on the first text; and send the first keyword and the second keyword in the summary of the webpage to a terminal device.

In some possible embodiments, the webpage obtaining module is further configured to: determine a target keyword in response to a selection operation on the search result; update the search term based on the target keyword to obtain an updated search term; and based on the updated search term, return to perform the step of obtaining at least one webpage corresponding to the search term.

In some possible embodiments, the summary obtaining module is further configured to: obtain a modified first text in response to a modification operation on the first text; and based on the modified text, return to perform the step of extracting the summary of the webpage from the body text of the webpage based on the search term and the first text.

In some possible embodiments, the summary obtaining module is specifically configured to enter the search term into an artificial intelligence generated content AIGC system, and obtain the first text output by the AIGC system.

According to a fourth aspect, an embodiment of this application further provides a display apparatus, where the apparatus includes:
a first interface display module, configured to display a first interface, where the first interface includes a first control;
a search term obtaining module, configured to obtain a search term entered by a user in the first control;
a search result obtaining module, configured to obtain a search result based on the search term, where the search result includes a summary of at least one webpage, the summary of each webpage is extracted from a body text of the webpage based on the search term and a first text, the first text is generated based on the search term, and the first text is a text associated with the search term; and
a search result display module, configured to display the search result in a second interface.

In some possible embodiments, the search result display module is further configured to display a second control in the second interface; and detect a selection operation on the second control and display the first text in a third interface.

In some possible embodiments, the search result display module is further configured to obtain a modified first text in response to a modification operation on the first text; obtain an updated search result based on the search term and the modified first text, where the updated search result includes a summary of at least one webpage, and the summary of each webpage is extracted from a body text of the webpage based on the search term and the modified first text; and display the updated search result in the second interface.

In some possible embodiments, the search result display module is specifically configured to: perform, in the second interface, first emphasis display on a first keyword in the summary corresponding to each webpage, and perform second emphasis display on a second keyword in the summary corresponding to each webpage, where the first keyword is a keyword obtained by performing word segmentation on the search term, and the second keyword is a keyword obtained by performing word segmentation on the first text.

In some possible embodiments, the first emphasis display includes: displaying in red, highlighting, displaying with a bottom wavy line, and/or displaying in bold; the second emphasis display includes: displaying in red, highlighting, displaying with a bottom wavy line, and/or displaying in bold; and the first emphasis display is different from the second emphasis display.

In some possible embodiments, the search term obtaining module is further configured to determine a target keyword in response to a selection operation on the search result; update the search term based on the target keyword to obtain an updated search term; and obtain an updated search result based on the updated search term, where the updated search result includes a summary of at least one webpage, the summary of each webpage is extracted from a body text of the webpage based on the updated search term and a second text, the second text is generated based on the updated search term, and the second text is a text associated with the updated search term; and displaying the updated search result in the second interface.

According to a fifth aspect, another embodiment of this application further provides an electronic device, including at least one processor and a memory communicatively connected to the at least one processor, where the memory stores instructions that may be executed by the at least one processor, and the instructions are executed by the at least one processor, to enable the at least one processor to perform any method provided in the embodiments of the first aspect of this application.

According to a sixth aspect, another embodiment of this application further provides a computer-readable storage medium, where the computer-readable storage medium stores a computer program, and the computer program is used to enable a computer to perform any method provided in the embodiments of the first aspect of this application.

Additional features and advantages of this application will be set forth in the specification that follows, and in part will be obvious from the specification, or be learned by practice of this application. Objectives and additional advantages of this application may be implemented and obtained by using structures specially specified in the written specification, claims, and accompanying drawings.

### BRIEF DESCRIPTION OF DRAWINGS

FIG. 1 is a schematic flowchart of extracting a summary in the related technology according to an embodiment of this application;
FIG. 2 is an overall schematic flowchart of a search result generation method according to an embodiment of this application;
FIG. 3 is a diagram of an internal structure of an AIGC system of a search result generation method according to an embodiment of this application;
FIG. 4 is a diagram in which a user enters a search term into a search box of a mobile phone browser in a search result generation method according to an embodiment of this application;
FIG. 5 is a diagram of a first text output by an AIGC system of a search result generation method according to an embodiment of this application;
FIG. 6A is a schematic flowchart of extracting a summary of a webpage from a body text of the webpage based on a search term and a first text in a search result generation method according to an embodiment of this application;
FIG. 6B is a schematic flowchart of determining a summary of a webpage based on a correlation between each body sentence and a keyword in a text keyword set in a search result generation method according to an embodiment of this application;
FIG. 7 is a diagram of a webpage in a search result generation method according to an embodiment of this application;
FIG. 8 is a schematic flowchart of obtaining a text keyword set in a search result generation method according to an embodiment of this application;
FIG. 9 is a diagram of a keyword and a weight in a search result generation method according to an embodiment of this application;
FIG. 10 is a diagram of performing normalization on a deduplicated text keyword set in a search result generation method according to an embodiment of this application.
FIG. 11 is a schematic flowchart of determining a correlation score between a body sentence and a search term in a search result generation method according to an embodiment of this application;
FIG. 12 is an overall schematic flowchart of determining a summary corresponding to each webpage in a search result generation method according to an embodiment of this application;
FIG. 13 is a schematic flowchart of obtaining a summary based on a search term and a first text in a search result generation method according to an embodiment of this application;

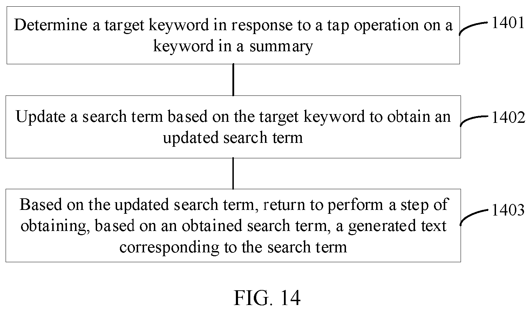

FIG. 14 is a diagram of performing a secondary search based on a keyword in a search result generation method according to an embodiment of this application;
FIG. 15 is a diagram of determining a target keyword in a search result generation method according to an embodiment of this application;
FIG. 16 is a diagram of displaying a first text in a search result generation method according to an embodiment of this application;
FIG. 17 is an overall schematic flowchart of a display method according to an embodiment of this application;
FIG. 18 is a diagram of a first control in a display method according to an embodiment of this application;
FIG. 19 is a diagram of a display interface in a display method according to an embodiment of this application;
FIG. 20 is a schematic flowchart of modifying a search term in a display method according to an embodiment of this application.
FIG. 21 is a schematic flowchart of modifying a first text in a display method according to an embodiment of this application;
FIG. 22 is a diagram of a system framework of a search result generation method according to an embodiment of this application;
FIG. 23 is a diagram of interaction of a search result generation method according to an embodiment of this application;
FIG. 24 is a diagram of an apparatus for a search result generation method according to an embodiment of this application;
FIG. 25 is a diagram of an apparatus for a display method according to an embodiment of this application; and
FIG. 26 is a diagram of an electronic device for a search result generation method according to an embodiment of this application.

### DESCRIPTION OF EMBODIMENTS

Embodiments described below with reference to the accompanying drawings are examples, and are intended to explain the present invention only, but should not be construed as a limitation on the present invention.

To better understand technical solutions of this application, the following describes embodiments of this application in detail with reference to the accompanying drawings.

It should be noted that described embodiments are merely some rather than all of embodiments of this application. All other embodiments obtained by a person of ordinary skill in the art based on embodiments of this application without creative efforts shall fall within the protection scope of this application.

The terms used in embodiments of this application are merely for the purpose of illustrating specific embodiments, and are not intended to limit this application. The terms "a", "said" and "the" of singular forms used in embodiments and the appended claims of this application are also intended to include plural forms, unless otherwise specified in the context clearly.

It should be understood that the term "and/or" used in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

The inventor finds that, in the current Internet era, search engines are one of the most important and commonly used tools for people to obtain target information in the ocean of information. After a user enters a search term into a search engine to perform a search, the search engine displays multiple results. Each result shows a title, a web address, a summary, and the like. The summary enables the user to quickly understand a snippet related to the search term in webpage content of the result, thereby helping the user determine whether the result is related to the search term, whether the result is useful to the user, and whether tapping is needed.

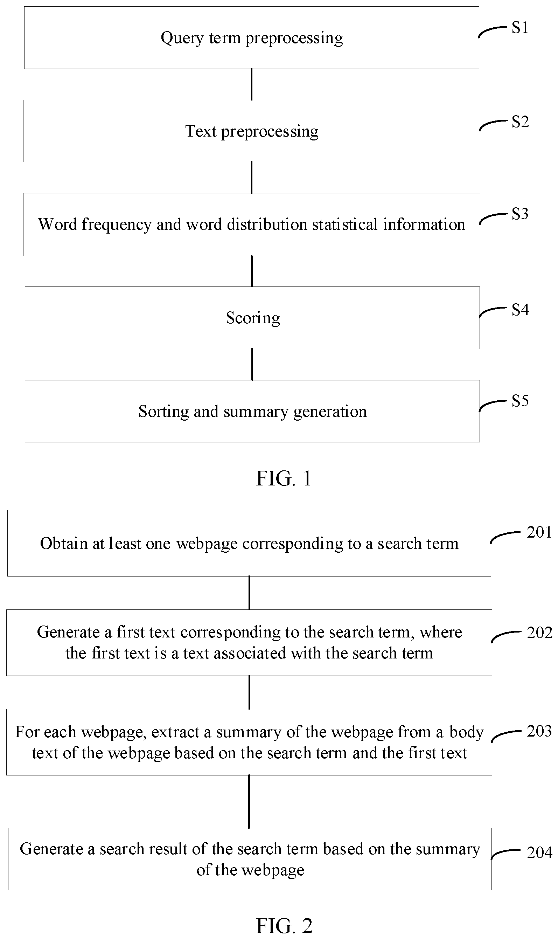

Each webpage contains a large quantity of body sentences, and the summary is determined from the body sentences. In the current summary computing manner, a correlation between a body sentence and the search term is computed based on a keyword of the search term and keywords in the body sentences of the webpage, and sentences most related to the search term are finally selected from the webpage content as the summary. For example, as shown in FIG. 1, the following steps are included: (1) In a query term preprocessing step, a word segmentation tool is used to segment a query term into several sub-query terms. (2) In a text preprocessing step, a preprocessed webpage text is divided into several sentences, each sentence is segmented by using the word segmentation tool, and distribution information of each sub-query term in the webpage text is saved. (3) In a word frequency and word distribution information statistics collection step, statistics about a quantity of sub-query terms included in each sentence, a quantity of consecutive sub-query terms included in each sentence, and types of sub-query terms included in each sentence are collected, a sub-query term appearing in the sentence is marked, and a specific sub-query term corresponding to the sub-query term appearing in the sentence is indicated. (4) In a scoring step, a scoring tool is used to score each sentence based on the statistical data of step (3), and a score for each sentence is computed. (5) In a sorting and summary generation step, the sentences are sorted in descending order of scores, and the first K sentences are selected to generate the summary, where 0 ≤ K ≤ 3.

When a search term entered by the user is complex, a summary obtained in this computing manner is unsatisfactory, and consequently the displayed search result does not conform to a user intent. The following problems mainly exist: When the search term entered by the user is incomplete, a keyword and semantic information obtained from the original search term cannot represent a complete user intent, and a selected summary is unsatisfactory. When the search term of the user has a question-answering intent, a summary selected based on a keyword and semantics of the search term cannot directly answer a question.

To resolve the foregoing problems, embodiments of this application provide a search result generation method and apparatus, a device, and a storage medium, to resolve the foregoing problems. An inventive concept of this application may be summarized as: At least one webpage corresponding to a search term is obtained; a first text corresponding to the search term is generated, where the first text is a text associated with the search term; for each webpage, a summary of the webpage is extracted from a body text of the webpage based on the search term and the first text; and a search result of the search term is generated based on the summary of the webpage.

In this application, the first text is obtained based on the search term, so that the search term is extended, thereby making the search term more complete. The summary is determined based on both the search term and the first text, which resolves a problem of poor summarization occurring when the search term is incomplete or has a question-answering intent. In this application, when the search result is displayed, a keyword corresponding to the search term in the summary and a keyword corresponding to the first text may be displayed with emphasis, so that the user can intuitively understand the search result.

First, an application scenario of a search result generation method provided in an embodiment of this application is described. The application scenario of this application exists in various electronic devices with graphical user interfaces, including but not limited to terminal devices such as mobile phones, tablets, notebook computers, and electronic watches. Application objects include all applications that have a search engine on the terminal devices.

For ease of further understanding of the search result generation method provided in this embodiment of this application, the following provides descriptions with reference to the accompanying drawings.

FIG. 2 is a schematic flowchart of a search result generation method according to an embodiment of this application.

Step 201: Obtain at least one webpage corresponding to a search term.

In this application, to obtain the webpage based on the search term, any one of the following technologies may be used: a web crawler technology, a retrieval and sorting technology, a webpage processing technology, a big data processing technology, a natural language processing technology, and the like. This is not limited in this application.

Step 202: Generate a first text corresponding to the search term, where the first text is a text associated with the search term.

In this application, in consideration that when the search term entered by the user is incomplete or has a question-answering intent, a selected summary may be unsatisfactory, in this application, after the search term is obtained, the first text is obtained based on the search term, and the summary is determined based on the first text in a subsequent step, thereby ensuring accuracy of the obtained summary.

In some possible embodiments, the first text is a text associated with the search term, and obtaining, based on the obtained search term, the first text corresponding to the search term includes: entering the search term into an artificial intelligence generated content AIGC system, to obtain the first text output by the AIGC system.

In some possible embodiments, a quantity of characters of the first text is greater than a quantity of characters of the search term.

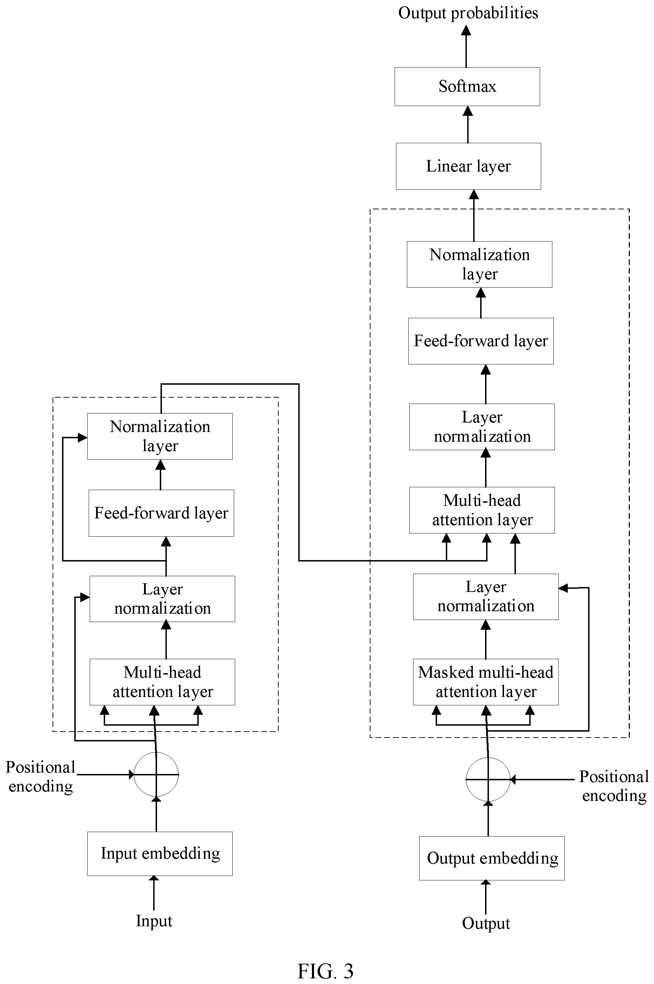

An internal structure of the AIGC system is shown in FIG. 3. The search term is entered into the AIGC system, and the AIGC system outputs the first text. The AIGC system may be Huawei's Pangu Large Model, ChatGPT, or the like. This is not limited in this application.

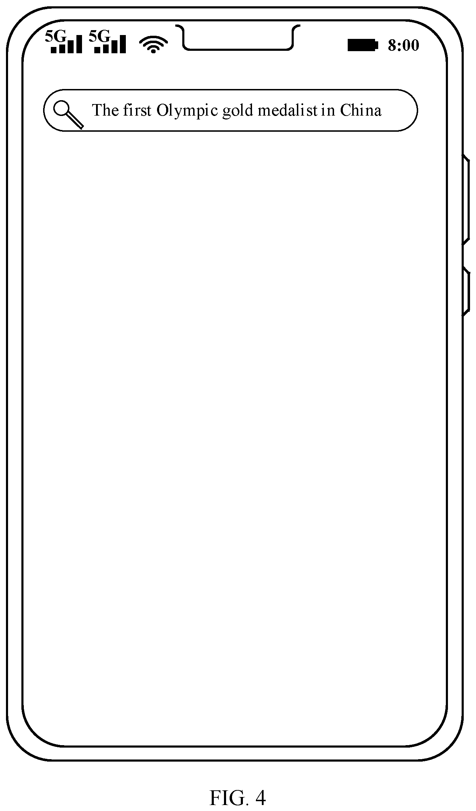

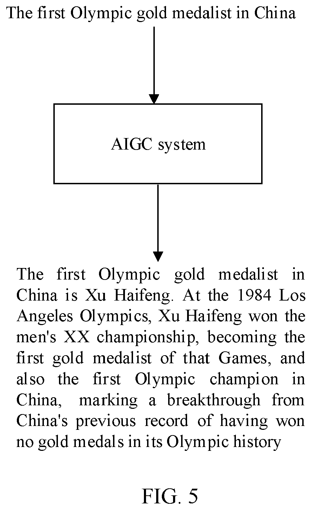

For example, as shown in FIG. 4, a search term "The first Olympic gold medalist in China" entered by a user in a search box of a mobile phone browser is obtained. As shown in FIG. 5, the search term is entered into the AIGC system, and a first text output by the AIGC system is: "The first Olympic gold medalist in China is Xu Haifeng. At the 1984 Los Angeles Olympics, Xu Haifeng won the men's XX championship, becoming the first gold medalist of that Games, and also the first Olympic champion in China, marking a breakthrough from China's previous record of having won no gold medals in its Olympic history".

In some other possible embodiments, obtaining, based on the obtained search term, the first text corresponding to the search term may be alternatively implemented as follows: entering the search term into a pre-trained semantic extension model, to obtain the first text output by the semantic extension model.

In some other possible embodiments, obtaining, based on the obtained search term, the first text corresponding to the search term may be alternatively implemented as follows: extending the search term by using any other method (for example, semantic extension), to obtain the first text.

It should be learned that a manner of obtaining the first text is not limited in this application, the three methods described above are merely two embodiments, and another method for obtaining, based on the search term, the first text associated with the search term is also applicable to this application.

Step 203: For each webpage, extract a summary of the webpage from a body text of the webpage based on the search term and the first text.

In this application, the first text is obtained by performing semantic extension on the search term, so that the search term is more complete. Therefore, when the summary is extracted from the body text of the webpage based on both the first text and the search term, the obtained summary is more complete.

Step 204: Generate a search result of the search term based on the summary of the webpage.

In this application, the first text is obtained based on the search term, so that semantic extension is implemented on the search term. In this way, the search term is more complete, and the summary is determined based on both the search term and the first text, which resolves the problem of poor summarization occurring when the search term is incomplete or has a question-answering intent.

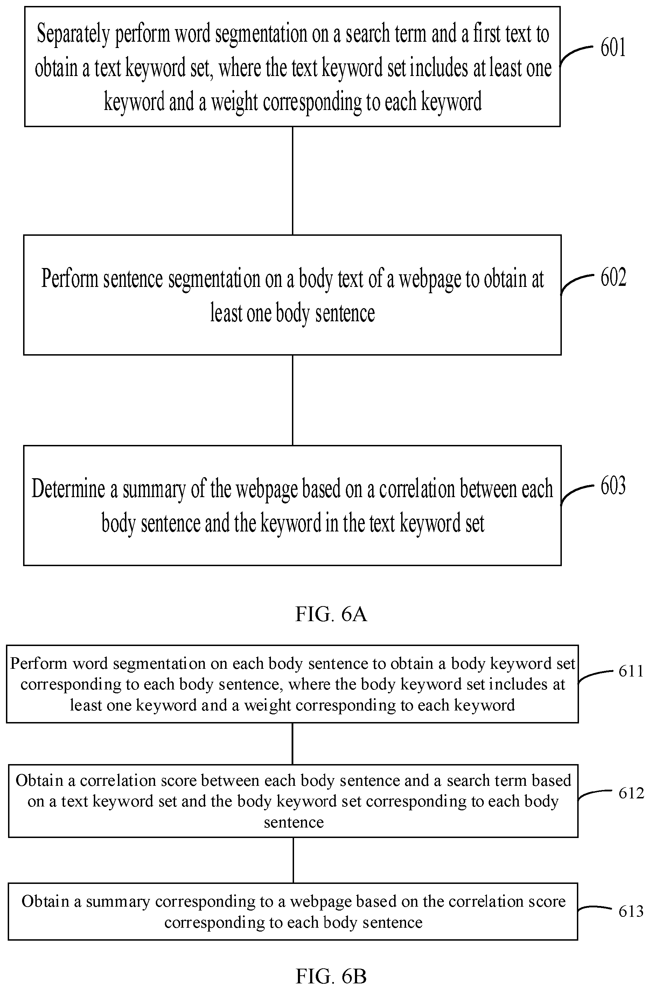

In some possible embodiments, the foregoing step 203 may be specifically implemented as steps shown in FIG. 6A.

Step 601: Separately perform word segmentation on a search term and a first text to obtain a text keyword set, where the text keyword set includes at least one keyword and a weight corresponding to each keyword.

In this application, word segmentation is performed on the search term to obtain a first keyword and a weight corresponding to the first keyword. Word segmentation is performed on the first text to obtain a second keyword and a weight corresponding to the second keyword. The first keyword, the weight corresponding to the first keyword, the second keyword, and the weight corresponding to the second keyword are combined to obtain the text keyword set.

The keywords in the keyword set obtained by using this method are richer and more complete, which avoids a problem that the search term entered by the user is incomplete, and consequently, the extracted summary does not meet an expectation of the user, thereby ensuring that a subsequently obtained summary better meets the expectation of the user.

Step 602: Perform sentence segmentation on a body text of a webpage to obtain at least one body sentence.

In this application, after the webpage corresponding to the search term is obtained, a text semantic segmentation technology may be used when sentence segmentation is performed on the webpage, or another sentence segmentation method may be used. This is not limited in this application. An existing word segmentation tool may be used to perform word segmentation on each body sentence.

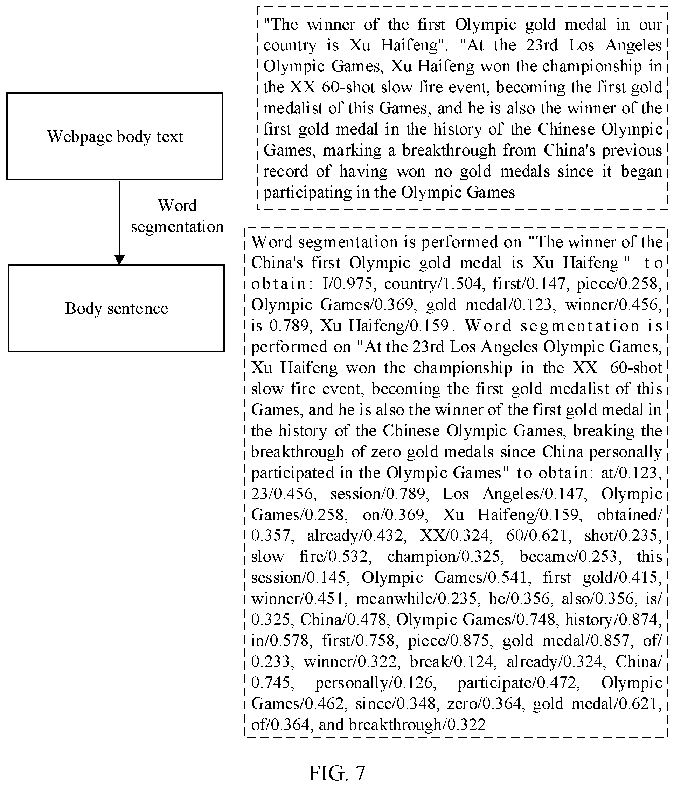

For example, as shown in FIG. 7, the webpage is: The winner of China's first Olympic gold medal is Xu Haifeng. At the 23rd Los Angeles Olympic Games, Xu Haifeng won the championship in the XX 60-shot slow fire event, becoming the first gold medalist of this Games, and he is also the winner of the first gold medal in the history of the Chinese Olympic Games, marking a breakthrough from China's previous record of having won no gold medals since it began participating in the Olympic Games.

Sentence segmentation is performed on this body text, and obtained body sentences include: "The winner of China's first Olympic gold medal is Xu Haifeng", and "At the 23rd Los Angeles Olympic Games, Xu Haifeng won the championship in the XX 60-shot slow fire event, becoming the first gold medalist of this Games, and he is also the winner of the first gold medal in the history of the Chinese Olympic Games, marking a breakthrough from China's previous record of having won no gold medals since it began participating in the Olympic Games".

Step 603: Determine a summary of the webpage based on a correlation between each body sentence and the keyword in the text keyword set.

In some possible embodiments, determining the summary of the webpage based on the correlation between each body sentence and the keyword in the text keyword set may be specifically implemented as steps shown in FIG. 6B.

Step 611: Perform word segmentation on each body sentence to obtain a body keyword set corresponding to each body sentence, where the body keyword set includes at least one keyword and a weight corresponding to each keyword.

FIG. 7 is still used as an example for description. Word segmentation is performed on "The winner of China's first Olympic gold medal is Xu Haifeng" to obtain: I/0.975, country/1.504, first/0.147, piece/0.258, Olympic Games/0.369, gold medal/0.123, winner/0.456, is/0.789, and Xu Haifeng/0.159. Word segmentation is performed on "At the 23rd Los Angeles Olympic Games, Xu Haifeng won the championship in the XX 60-shot slow fire event, becoming the first gold medalist of this Games, and he is also the winner of the first gold medal in the history of the Chinese Olympic Games, marking a breakthrough from China's previous record of having won no gold medals since it began participating in the Olympic Games" to obtain: at/0.123, 23/0.456, session/0.789, Los Angeles/0.147, Olympic Games/0.258, on/0.369, Xu Haifeng/0.159, obtained/0.357, already/0.432, XX/0.324, 60/0.621, shot/0.235, slow fire/0.532, champion/0.325, became/0.253, this session/0.145, Olympic Games/0.541, first gold/0.415, winner/0.451, meanwhile/0.235, he/0.356, also/0.356, is/0.325, China/0.478, Olympic Games/0.748, history/0.874, in/0.578, first/0.758, piece/0.875, gold medal/0.857, of/0.233, winner/0.322, break/0.124, already/0.324, China/0.745, personally/0.126, participate/0.472, Olympic Games/0.462, since/0.348, zero/0.364, gold medal/0.621, of/0.364, and breakthrough/0.322.

Step 612: Obtain a correlation score between each body sentence and a search term based on a text keyword set and the body keyword set corresponding to each body sentence.

In this application, a correlation degree between the body sentence and the search term, namely, the correlation score, may be determined based on each body keyword set and text keyword set.

Step 613: Obtain a summary corresponding to a webpage based on the correlation score corresponding to each body sentence.

In some possible embodiments, after the correlation score between each body sentence and the search term is determined, the body sentences may be sorted based on the correlation score corresponding to each body sentence to obtain a body sentence sequence, and a specified quantity of body sentences may be selected from the body sentence sequence in descending order of scores as the summary.

To ensure display effect and coherence of the body sentence, in some embodiments, one body sentence with the highest score may be selected from the body sentence sequence as the summary. If the body sentence is too short to fully fill a corresponding summary display area, both the body sentence and a body sentence adjacent to the body sentence in the webpage may be selected as the summary, to ensure the display effect.

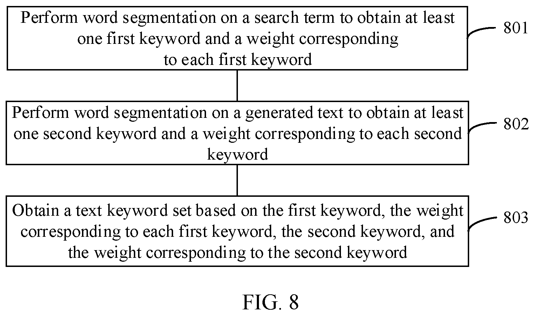

In some possible embodiments, word segmentation is separately performed on the search term and the first text, to obtain the text keyword set. In other words, step 601 may be specifically implemented as steps shown in FIG. 8.

Step 801: Perform word segmentation on a search term to obtain at least one first keyword and a weight corresponding to each first keyword.

In this application, to ensure that the obtained summary is more consistent with the search term, word segmentation is performed on the search term. In this application, word segmentation performed on the search term may be based on a dictionary-based word segmentation algorithm or a statistical machine learning algorithm. This is not limited in this application.

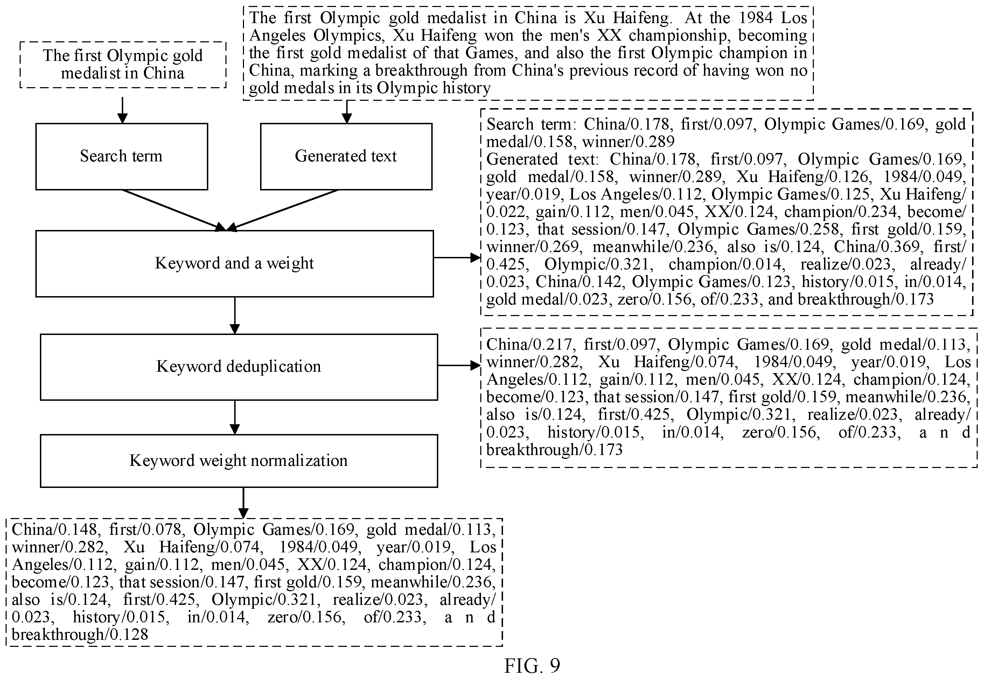

For example, as shown in FIG. 9, the search term is "The first Olympic gold medalist in China". Word segmentation is performed on the search term to obtain first keywords and weights including: China/0.178, first/0.097, Olympic Games/0.169, gold medal/0.158, and winner/0.289.

Step 802: Perform word segmentation on a first text to obtain at least one second keyword and a weight corresponding to each second keyword.

In this application, when word segmentation is performed on the first text, a word segmentation method same as that used for the search term may be adopted, or a word segmentation method different from that used for the search term may be adopted. Word segmentation performed on the first text may be based on a dictionary-based word segmentation algorithm or a statistical machine learning algorithm. This is not limited in this application.

For example, as shown in FIG. 9, the first text is "The first Olympic gold medalist in China is Xu Haifeng. At the 1984 Los Angeles Olympics, Xu Haifeng won the men's XX championship, becoming the first gold medalist of that Games, and also the first Olympic champion in China, marking a breakthrough from China's previous record of having won no gold medals in its Olympic history". Word segmentation is performed on the first text to obtain second keywords and weights including: China/0.178, first/0.097, Olympic Games/0.169, gold medal/0.158, winner/0.289, Xu Haifeng/0.126, 1984/0.049, year/0.019, Los Angeles/0.112, Olympic Games/0.125, Xu Haifeng/0.022, gain/0.112, men/0.045, XX/0.124, champion/0.234, become/0.123, that session/0.147, Olympic Games/0.258, first gold/0.159, winner/0.269, meanwhile/0.236, also is/0.124, China/0.369, first/0.425, Olympic/0.321, champion/0.014, realize/0.023, already/0.023, China/0.142, Olympic Games/0.123, history/0.015, in/0.014, gold medal/0.023, zero/0.156, of/0.233, and breakthrough/0.173.

Step 803: Obtain a text keyword set based on the first keyword, the weight corresponding to each first keyword, the second keyword, and the weight corresponding to the second keyword.

In this application, the first keyword, the weight corresponding to the first keyword, the second keyword, and the weight corresponding to the second keyword are combined to obtain the text keyword set, so that the search term is extended, the search term is richer and complete, thereby ensuring that the subsequently obtained summary better meets the expectation of the user.

For example, the search term is "The first Olympic gold medalist in China". Word segmentation is performed on the search term to obtain first keywords and weights including: China/0.178, first/0.097, Olympic Games/0.169, gold medal/0.158, and winner/0.289. The first text is "The first Olympic gold medalist in China is Xu Haifeng. At the 1984 Los Angeles Olympics, Xu Haifeng won the men's XX championship, becoming the first gold medalist of that Games, and also the first Olympic champion in China, marking a breakthrough from China's previous record of having won no gold medals in its Olympic history." Word segmentation is performed on the first text to obtain second keywords and weights including: China/0.178, first/0.097, Olympic Games/0.169, gold medal/0.158, winner/0.289, Xu Haifeng/0.126, 1984/0.049, year/0.019, Los Angeles/0.112, Olympic Games/0.125, Xu Haifeng/0.022, gain/0.112, men/0.045, XX/0.124, champion/0.234, become/0.123, that session/0.147, Olympic Games/0.258, first gold/0.159, winner/0.269, meanwhile/0.236, also is/0.124, China/0.369, first/0.425, Olympic/0.321, champion/0.014, realize/0.023, already/0.023, China/0.142, Olympic Games/0.123, history/0.015, in/0.014, gold medal/0.023, zero/0.156, of/0.233, and breakthrough/0.173. Therefore, the text keyword set includes: China/0.178, first/0.097, Olympic Games/0.169, gold medal/0.158, winner/0.289, China/0.178, first/0.097, Olympic Games/0.169, gold medal/0.158, winner/0.289, Xu Haifeng/0.126, 1984/0.049, year/0.019, Los Angeles/0.112, Olympic Games/0.125, Xu Haifeng/0.022, gain/0.112, men/0.045, XX/0.124, champion/0.234, become/0.123, that session/0.147, Olympic Games/0.258, first gold/0.159, winner/0.269, meanwhile/0.236, also is/0.124, China/0.369, first/0.425, Olympic/0.321, champion/0.014, realize/0.023, already/0.023, China/0.142, Olympic Games/0.123, history/0.015, in/0.014, gold medal/0.023, zero/0.156, of/0.233, and breakthrough/0.173.

It can be seen that there are many duplicate keywords in the obtained text keyword set. Therefore, in this application, to reduce computational load and improve search efficiency, after the text keyword set is constructed based on the steps shown in FIG. 8, the following may be implemented: performing deduplication processing on the text keyword set to obtain a deduplicated text keyword set.

When deduplication is performed on the text keyword set, only one instance is retained for same keywords, and a weight of the retained keyword is an average of weights of the same keywords.

For example, as shown in FIG. 9, the text keyword set includes: China/0.178, first/0.097, Olympic Games/0.169, gold medal/0.158, winner/0.289, China/0.178, first/0.097, Olympic Games/0.169, gold medal/0.158, winner/0.289, Xu Haifeng/0.126, 1984/0.049, year/0.019, Los Angeles/0.112, Olympic Games/0.125, Xu Haifeng/0.022, gain/0.112, men/0.045, XX/0.124, champion/0.234, become/0.123, that session/0.147, Olympic Games/0.258, first gold/0.159, winner/0.269, meanwhile/0.236, also is/0.124, China/0.369, first/0.425, Olympic/0.321, champion/0.014, realize/0.023, already/0.023, China/0.142, Olympic Games/0.123, history/0.015, in/0.014, gold medal/0.023, zero/0.156, of/0.233, and breakthrough/0.173. Therefore, the deduplicated text keyword set includes: China/0.217, first/0.097, Olympic Games/0.169, gold medal/0.113, winner/0.282, Xu Haifeng/0.074, 1984/0.049, year/0.019, Los Angeles/0.112, gain/0.112, men/0.045, XX/0.124, champion/0.124, become/0.123, that session/0.147, first gold/0.159, meanwhile/0.236, also is/0.124, first/0.425, Olympic/0.321, realize/0.023, already/0.023, history/0.015, in/0.014, zero/0.156, of/0.233, and breakthrough/0.173.

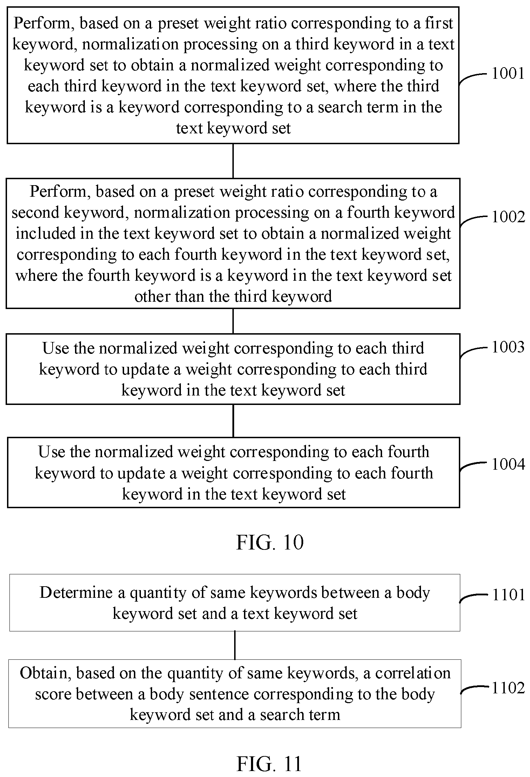

In some possible embodiments, to further improve data accuracy, after the text keyword set is obtained, normalization may be performed on the weight of the keyword in the text keyword set to increase a proportion of the first keyword in the text keyword set. This may be specifically implemented as steps shown in FIG. 10.

Step 1001: Perform, based on a preset weight ratio corresponding to a first keyword, normalization processing on a third keyword in a text keyword set to obtain a normalized weight corresponding to each third keyword in the text keyword set, where the third keyword is a keyword corresponding to a search term in the text keyword set.

For example, the text keyword set includes: China/0.217, first/0.097, Olympic Games/0.169, gold medal/0.113, winner/0.282, Xu Haifeng/0.074, 1984/0.049, year/0.019, Los Angeles/0.112, gain/0.112, men/0.045, XX/0.124, champion/0.124, become/0.123, that session/0.147, first gold/0.159, meanwhile/0.236, also is/0.124, first/0.425, Olympic/0.321, realize/0.023, already/0.023, history/0.015, in/0.014, zero/0.156, of/0.233, and breakthrough/0.173. The first keywords include: China, first, Olympic Games, gold medal, and winner. Therefore, the third keywords are: China, first, Olympic Games, gold medal, and winner.

In some possible embodiments, performing, based on the preset weight ratio corresponding to the first keyword, normalization processing on the third keyword in the text keyword set may be specifically implemented as follows: performing normalization processing on the third keyword in the text keyword set based on the preset weight ratio corresponding to the first keyword and a first normalization formula. The first normalization formula is shown as formula 1: ${qw}_{i}^{′} = α ∗ \left(\frac{{qw}_{i}}{{\sum }_{1}^{m} {qw}_{i}}\right) ;$ (formula 1) where ${qw}_{i}^{′}$ is a normalized weight of an *i*^{th} third keyword in the text keyword set, α is the preset weight ratio corresponding to the first keyword, *qwᵢ* is a weight corresponding to the *i*^{th} third keyword in the text keyword set, and *m* is a quantity of third keywords in the text keyword set.

In this application, in consideration that the first keyword is obtained based on the search term entered by the user and can better represent the user intent, when the preset weight ratio of the first keyword is set, the preset weight ratio of the first keyword may be set to be greater than the preset weight ratio of the second keyword.

For example, as shown in FIG. 9, the preset weight ratio corresponding to the first keyword is 0.6, and the text keyword set includes: China/0.217, first/0.097, Olympic Games/0.169, gold medal/0.113, winner/0.282, Xu Haifeng/0.074, 1984/0.049, year/0.019, Los Angeles/0.112, gain/0.112, men/0.045, XX/0.124, champion/0.124, become/0.123, that session/0.147, first gold/0.159, meanwhile/0.236, also is/0.124, first/0.425, Olympic/0.321, realize/0.023, already/0.023, history/0.015, in/0.014, zero/0.156, of/0.233, and breakthrough/0.173. The first keywords include: China, first, Olympic Games, gold medal, and winner. The third keywords are: China, first, Olympic Games, gold medal, and winner. A 1st third keyword in the text keyword set is "China", a 2nd third keyword is "first", a 3rd third keyword is "Olympic Games", a 4th third keyword is "gold medal", and a 5th third keyword is "winner". Therefore, a normalized weight of the 1st third keyword "China" is: ${qw}_{1}^{′} = 0.6 ∗ \left(\frac{0.217}{0.217 + 0.097 + 0.169 + 0.113 + 0.282}\right) = 0.148$;

Similarly, a normalized weight of another third keyword can be obtained.

Step 1002: Perform, based on a preset weight ratio corresponding to a second keyword, normalization processing on a fourth keyword included in the text keyword set to obtain a normalized weight corresponding to each fourth keyword in the text keyword set, where the fourth keyword is a keyword in the text keyword set other than the third keyword.

For example, the text keyword set includes: China/0.217, first/0.097, Olympic Games/0.169, gold medal/0.113, winner/0.282, Xu Haifeng/0.074, 1984/0.049, year/0.019, Los Angeles/0.112, gain/0.112, men/0.045, XX/0.124, champion/0.124, become/0.123, that session/0.147, first gold/0.159, meanwhile/0.236, also is/0.124, first/0.425, Olympic/0.321, realize/0.023, already/0.023, history/0.015, in/0.014, zero/0.156, of/0.233, and breakthrough/0.173. The first keywords include: China, first, Olympic Games, gold medal, and winner. The third keywords are determined as follows: China, first, Olympic Games, gold medal, and winner. Therefore, the fourth keywords are: Xu Haifeng, 1984, year, Los Angeles, win, men, XX, champion, become, that session, first gold, meanwhile, also is, first, Olympic, realize, already, history, in, zero, of, and breakthrough.

In some possible embodiments, performing, based on the preset weight ratio corresponding to the second keyword, normalization processing on the fourth keyword included in the text keyword set may be specifically implemented as follows: performing normalization processing on the fourth keyword in the text keyword set based on the preset weight ratio corresponding to the second keyword and a second normalization formula. The second normalization formula is shown as formula 2: ${tw}_{i}^{′} = \left(1-α\right) ∗ \left(\frac{{tw}_{i}}{{\sum }_{1}^{n} {tw}_{i}}\right) ;$ (formula 2) where ${tw}_{i}^{′}$ is a normalized weight of an *i*^{th} fourth keyword in the text keyword set, 1 - α is the preset weight ratio corresponding to the second keyword, *twᵢ* is a weight corresponding to the *i*^{th} fourth keyword in the text keyword set, and *n* is a quantity of fourth keywords in the text keyword set.

For example, as shown in FIG. 9, the preset weight ratio corresponding to the second keyword is 0.4, and the text keyword set includes: China/0.217, first/0.097, Olympic Games/0.169, gold medal/0.113, winner/0.282, Xu Haifeng/0.074, 1984/0.049, year/0.019, Los Angeles/0.112, gain/0.112, men/0.045, XX/0.124, champion/0.124, become/0.123, that session/0.147, first gold/0.159, meanwhile/0.236, also is/0.124, first/0.425, Olympic/0.321, realize/0.023, already/0.023, history/0.015, in/0.014, zero/0.156, of/0.233, and breakthrough/0.173. The fourth keywords are determined to include: Xu Haifeng, 1984, year, Los Angeles, gain, men, XX, champion, become, that session, first gold, meanwhile, also is, first, Olympic, realize, already, history, in, zero, of, and breakthrough. A 1st fourth keyword in the text keyword set is Xu Haifeng, a 2nd fourth keyword is 1984, a 3rd fourth keyword is Los Angeles, ..., a 22nd fourth keyword is breakthrough. Therefore, a normalized weight of the 1st fourth keyword is: ${tw}_{1}^{′} = 0.4 ∗ \left(\frac{0.074}{0.074 + 0.049 + 0.019 + ⋯ … + 0.173}\right) = 0.128$ ;

Similarly, a normalized weight of another fourth keyword can be obtained.

Step 1003: Use the normalized weight corresponding to each third keyword to update a weight corresponding to each third keyword in the text keyword set.

Step 1004: Use the normalized weight corresponding to each fourth keyword to update a weight corresponding to each fourth keyword in the text keyword set.

In other words, in this application, after normalization is performed on the text keyword set, the normalized weights are used to replace the weights corresponding to the keywords in the text keyword set.

It should be noted that a sequence of performing the steps in FIG. 10 is not limited in this application, provided that step 1001 is performed before step 1003, and step 1002 is performed before step 1004. For example, in addition to the sequence shown in FIG. 10, the sequence of performing the steps in FIG. 10 may alternatively be: step 1001 - step 1003 - step 1002 - step 1004; or step 1002 - step 1004 - step 1001 - step 1003; or the like.

In some possible embodiments, for the body keyword set corresponding to each body sentence, the correlation score between each body sentence and the search term is obtained based on the text keyword set and the body keyword set corresponding to each body sentence. In other words, step 604 may be specifically implemented as steps shown in FIG. 11.

Step 1101: Determine a quantity of same keywords between a body keyword set and a text keyword set.

Step 1102: Obtain, based on the quantity of same keywords, a correlation score between a body sentence corresponding to the body keyword set and a search term.

In some possible embodiments, obtaining, based on the quantity of same keywords, the correlation score between the body sentence corresponding to the body keyword set and the search term may be specifically implemented as follows: obtaining, based on the quantity of same keywords and a correlation formula, the correlation score between the body sentence corresponding to the body keyword set and the search term. The correlation formula is shown as formula 3: ${revelance}_{s} = {\sum }_{1}^{l} {m}_{i} ∗ {s}_{i} ;$ (formula 3) where revelance*ₛ* is the correlation score between the body sentence corresponding to the body keyword set and the search term, *l* is the quantity of same keywords between the body keyword set and the text keyword set, *mᵢ* is a weight corresponding to an *i*^{th} keyword in the text keyword set, and *sᵢ* is a weight corresponding to an *i*^{th} keyword in the body keyword set.

For example, the text keyword set includes: China/0.217, first/0.097, Olympic Games/0.169, gold medal/0.113, winner/0.282, Xu Haifeng/0.074, 1984/0.049, year/0.019, Los Angeles/0.112, gain/0.112, men/0.045, XX/0.124, champion/0.124, become/0.123, that session/0.147, first gold/0.159, meanwhile/0.236, also is/0.124, first/0.425, Olympic/0.321, realize/0.023, already/0.023, history/0.015, in/0.014, zero/0.156, of/0.233, and breakthrough/0.173.

The body keyword set includes: at/0.123, 23/0.456, session/0.789, Los Angeles/0.147, Olympic Games/0.258, on/0.369, Xu Haifeng/0.159, obtained/0.357, already/0.432, XX/0.324, 60/0.621, shot/0.235, slow fire/0.532, champion/0.325, became/0.253, this session/0.145, Olympic Games/0.541, first gold/0.415, winner/0.451, meanwhile/0.235, he/0.356, also/0.356, is/0.325, China/0.478, Olympic Games/0.748, history/0.874, in/0.578, first/0.758, piece/0.875, gold medal/0.857, of/0.233, winner/0.322, break/0.124, already/0.324, China/0.745, personally/0.126, participate/0.472, Olympic Games/0.462, since/0.348, zero/0.364, gold medal/0.621, of/0.364, and breakthrough/0.322. Therefore, the quantity of same keywords is 15. The correlation score between the body keyword set and the text keyword set can be obtained by using the foregoing correlation formula.

In some possible embodiments, to help the user intuitively understand a keyword in the summary, before generating the search result of the search term based on the summary of the webpage, the following may be implemented: determining, based on the text keyword set, a first keyword and a second keyword in the summary of the webpage, where the first keyword is a keyword obtained by performing word segmentation on the search term, and the second keyword is a keyword obtained by performing word segmentation on the first text; and sending the first keyword and the second keyword in the summary of the webpage to a terminal device. In this method, the terminal device can use different display methods based on different keywords.

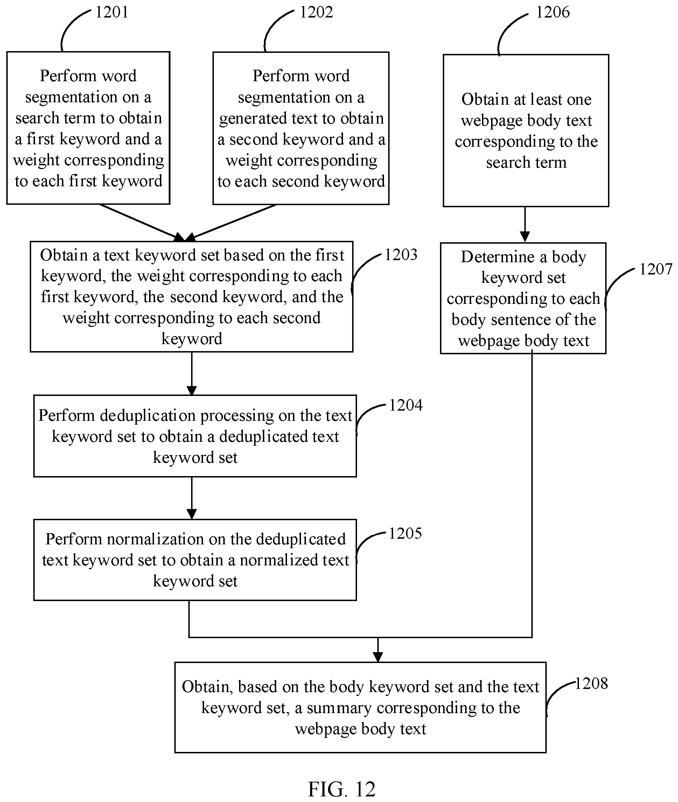

For ease of further understanding, the following describes an overall process of determining the summary corresponding to each webpage, as shown in FIG. 12.

Step 1201: Perform word segmentation on a search term to obtain a first keyword and a weight corresponding to each first keyword.

Step 1202: Perform word segmentation on a first text to obtain a second keyword and a weight corresponding to each second keyword.

Step 1203: Obtain a text keyword set based on the first keyword, the weight corresponding to each first keyword, the second keyword, and the weight corresponding to each second keyword.

Step 1204: Perform deduplication processing on the text keyword set to obtain a deduplicated text keyword set.

Step 1205: Perform normalization on the deduplicated text keyword set to obtain a normalized text keyword set.

Step 1206: Obtain at least one webpage corresponding to the search term.

Step 1207: Determine a body keyword set corresponding to each body sentence of the webpage.

Step 1208: Obtain, based on the body keyword set and the text keyword set, a summary corresponding to the webpage.

In this application, the summary corresponding to each webpage can be obtained by performing the steps shown in FIG. 12.

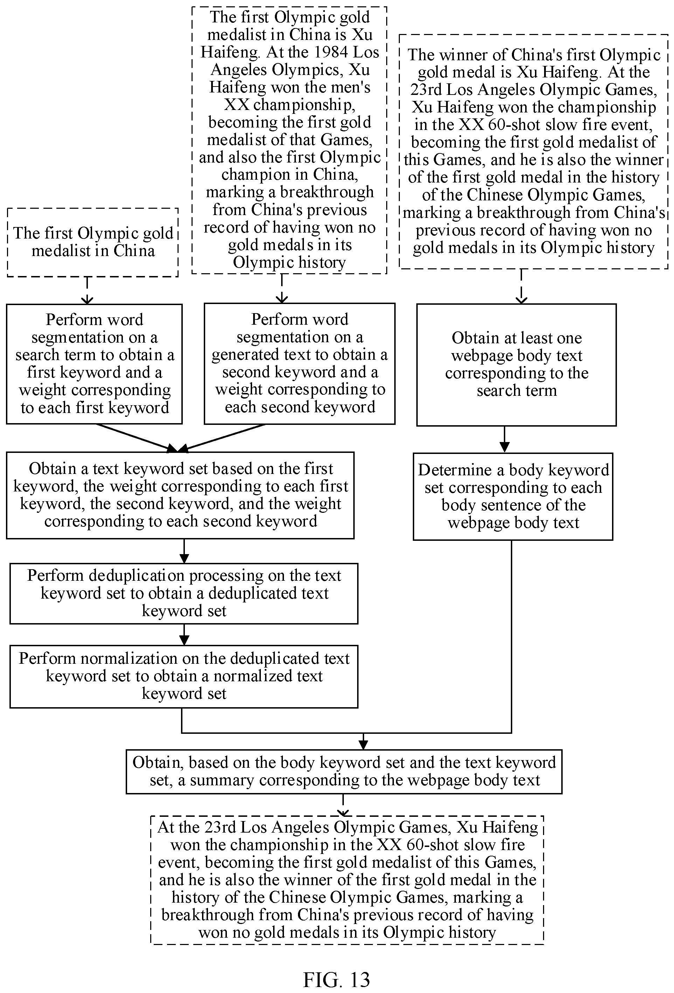

For example, as shown in FIG. 13, the search term is "The first Olympic gold medalist in China", the first text is "The first Olympic gold medalist in China is Xu Haifeng. At the 1984 Los Angeles Olympics, Xu Haifeng won the men's XX championship, becoming the first gold medalist of that Games, and also the first Olympic champion in China, marking a breakthrough from China's previous record of having won no gold medals in its Olympic history", and the webpage is "The winner of China's first Olympic gold medal is Xu Haifeng. At the 23rd Los Angeles Olympic Games, Xu Haifeng won the championship in the XX 60-shot slow fire event, becoming the first gold medalist of this Games, and he is also the winner of the first gold medal in the history of the Chinese Olympic Games, marking a breakthrough from China's previous record of having won no gold medals since it began participating in the Olympic Games". The determined summary is: "At the 23rd Los Angeles Olympic Games, Xu Haifeng won the championship in the XX 60-shot slow fire event, becoming the first gold medalist of this Games, and he is also the winner of the first gold medal in the history of the Chinese Olympic Games, marking a breakthrough from China's previous record of having won no gold medals since it began participating in the Olympic Games".

In some possible embodiments, the user may be dissatisfied with the displayed summary or the first text. Therefore, in this application, to ensure user experience and further ensure accuracy of summary extraction, a secondary search may be performed through the steps shown in FIG. 12.

Step 1401: Determine a target keyword in response to a selection operation on a search result.

Step 1402: Update a search term based on the target keyword to obtain an updated search term.

Step 1403: Based on the updated search term, return to perform the step of obtaining at least one webpage corresponding to the search term.

In other words, in this application, after step 1403 is performed, the process starts again from step 201.

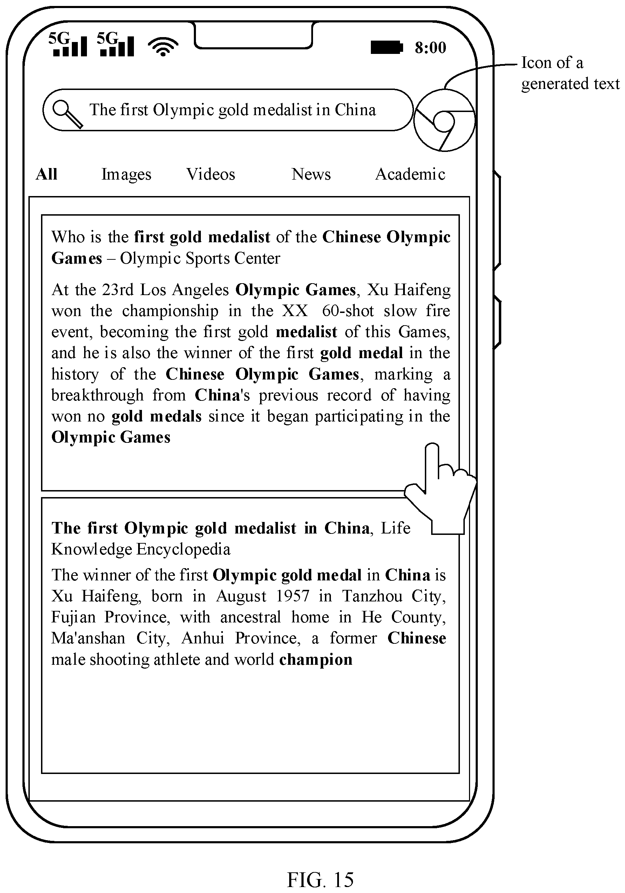

For example, as shown in FIG. 15, if the user taps on "gold medal" in the summary, the target keyword is determined to be "gold medal", and "gold medal" is used to replace "The first Olympic gold medalist in China" to perform a secondary search. In other words, the steps shown in FIG. 2 are performed again.

In some possible embodiments, the user may consider that the first text is inaccurate. Therefore, in this application, to ensure user experience and further ensure accuracy of the search, after the first text is displayed in a display interface, the following steps may be implemented to perform the secondary search based on the first text modified by the user: obtaining a modified first text in response to a modification operation on the first text; and based on the modified text, returning to perform the step of extracting the summary of the webpage from the body text of the webpage based on the search term and the first text.

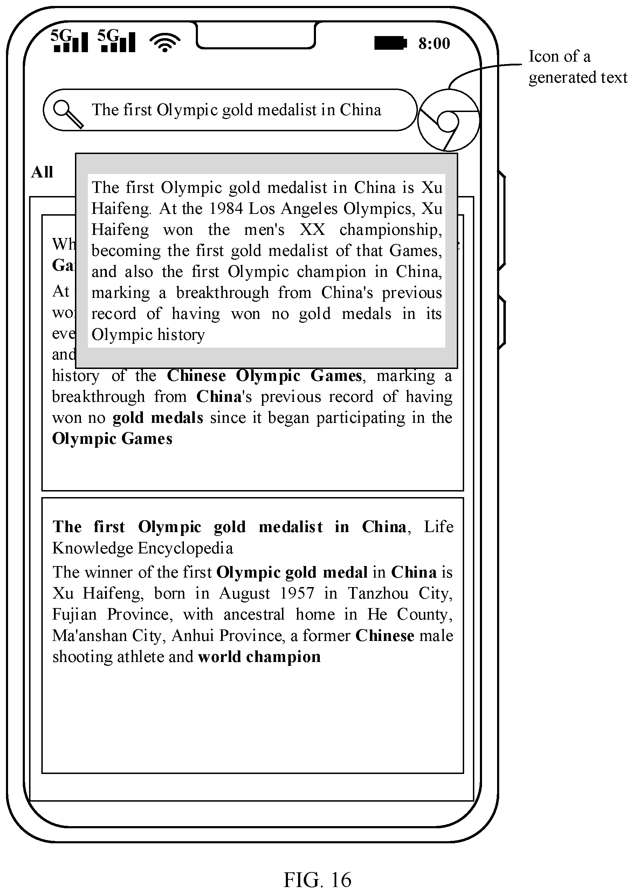

For example, as shown in FIG. 16, the first text is "The first Olympic gold medalist in China is Xu Haifeng. At the 1984 Los Angeles Olympics, Xu Haifeng won the men's XX championship, becoming the first gold medalist of that Games, and also the first Olympic champion in China, marking a breakthrough from China's previous record of having won no gold medals in its Olympic history". The user modifies the first text to "The first Olympic gold medalist in China is Xu Haifeng. Introduction to Xu Haifeng's life". Then, based on the search term "The first Olympic gold medalist in China" and the modified text "The first Olympic gold medalist in China is Xu Haifeng. Introduction to Xu Haifeng's life ", the step of separately performing word segmentation on the search term and the first text is performed.

It should be learned that, to ensure search efficiency, the search result generation method provided in this application may be performed in a cloud. When the terminal device has high computational power, the method may alternatively be performed in the terminal device. This is not limited in this application.

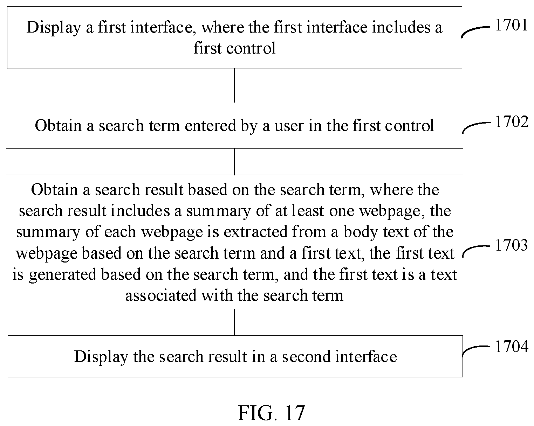

An embodiment of this application further provides a display method. FIG. 17 is an overall schematic flowchart of a display method according to an embodiment of this application.

Step 1701: Display a first interface, where the first interface includes a first control.

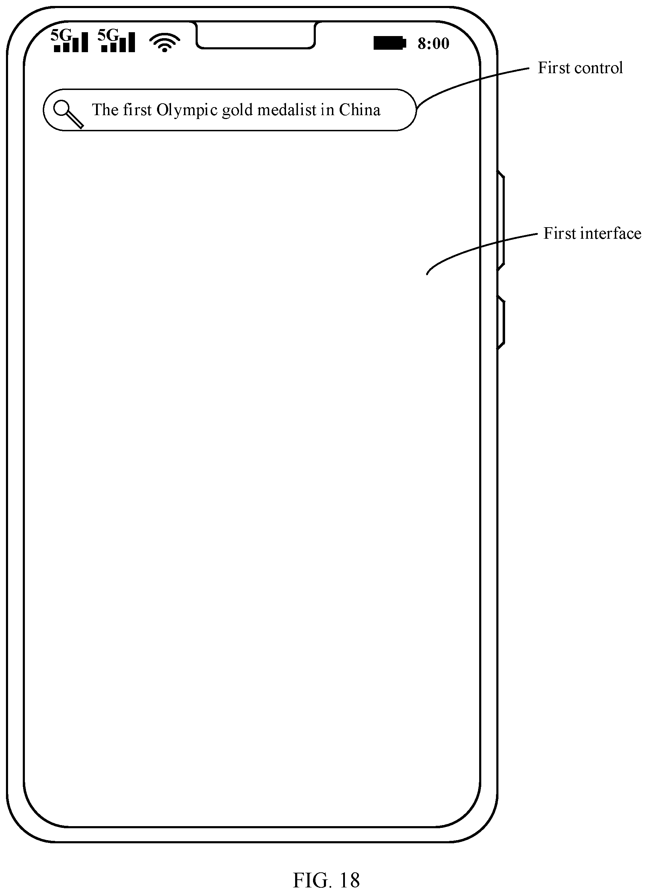

In this application, a user may perform an operation of entering a search term in the first control. A position of the first control may be set on an upper part of the first interface, may be set in the middle of the first interface, or may be set at another position of the first interface. The position of the first control in the first interface is not limited in this application. For example, as shown in FIG. 18, the first control is set on the upper part of the first interface.

Step 1702: Obtain a search term entered by a user in the first control.

For example, as shown in FIG. 4, the search term entered by the user in the first control (a search box of a mobile browser) is "The first Olympic gold medalist in China".

Step 1703: Obtain a search result based on the search term, where the search result includes a summary of at least one webpage, the summary of each webpage is extracted from a body text of the webpage based on the search term and a first text, the first text is generated based on the search term, and the first text is a text associated with the search term.

Step 1704: Display the search result in a second interface.

In this application, displaying the search result in the second interface may be specifically implemented as follows: performing, in the second interface, first emphasis display on a first keyword in the summary corresponding to each webpage, and performing second emphasis display on a second keyword in the summary corresponding to each webpage, where the first keyword is obtained by performing word segmentation on the search term, and the second keyword is obtained by performing word segmentation on the first text.

It should be learned that when the search result generation method is executed by a cloud, the first keyword and the second keyword are received from the cloud. When the search result generation method is executed by a terminal device, the first keyword is obtained by directly performing word segmentation on the search term, and the second keyword is obtained by directly performing word segmentation on the first text.

The first emphasis display includes: displaying in red, highlighting, displaying with a bottom wavy line, and displaying in bold. The second emphasis display includes: displaying in red, highlighting, displaying with a bottom wavy line, and displaying in bold. The first emphasis display is different from the second emphasis display.

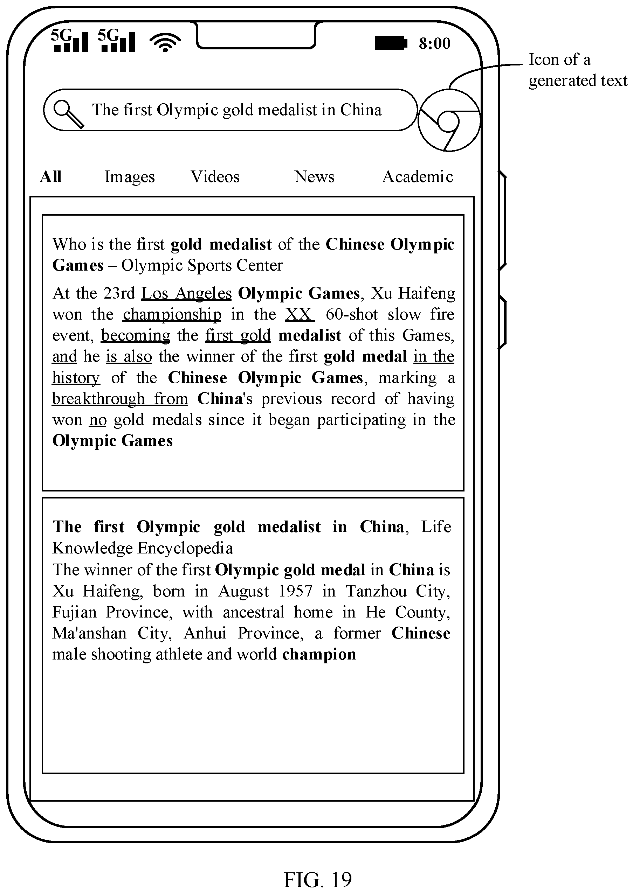

For example, the text keyword set includes: China, first, Olympic Games, gold medal, winner, Xu Haifeng, Los Angeles, win, men, XX, champion, become, first gold, meanwhile, also is, history, in, zero, of, and breakthrough. The first keywords include: China, first, Olympic Games, gold medal, winner, and Xu Haifeng. The second keywords include: Los Angeles, win, men, XX, champion, become, first gold, meanwhile, also is, history, in, zero, of, and breakthrough. A first emphasis display manner is bold, and a second emphasis display manner is an underline. Search results in the second interface are shown in FIG. 19.

In a possible embodiment, to ensure viewing feeling of the user, when the first text is displayed in the display interface, the second control may be displayed in the second interface. When a selection operation on the second control is detected, the first text is displayed in a third interface.

For example, the second control is shown in FIG. 19. In response to a trigger operation on the second control, as shown in FIG. 16, the first text is displayed as follows: "The first Olympic gold medalist in China is Xu Haifeng. At the 1984 Los Angeles Olympics, Xu Haifeng won the men's XX championship, becoming the first gold medalist of that Games, and also the first Olympic champion in China, marking a breakthrough from China's previous record of having won no gold medals in its Olympic history".

It should be learned that an icon in FIG. 19 is merely an embodiment, and a specific style of an icon of the first text is not limited in this application. In addition, a display position of the icon of the first text is not limited in this application.

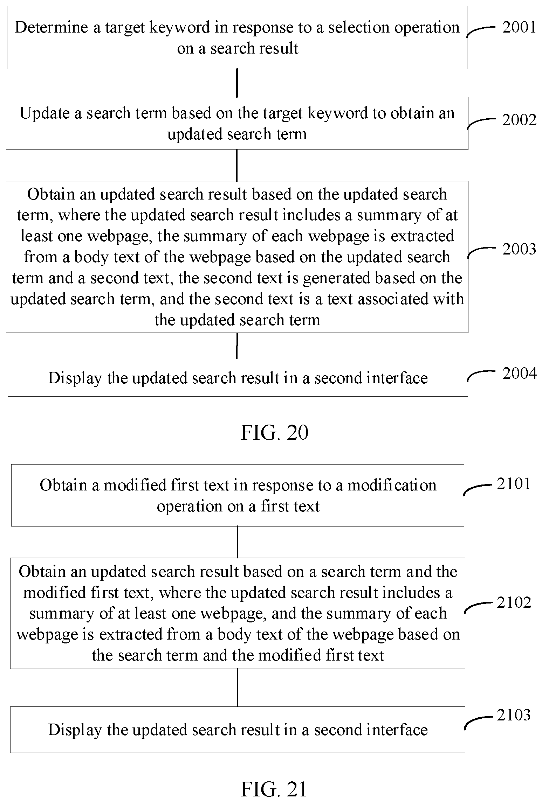

In some possible embodiments, the user may be dissatisfied with the displayed summary or the first text. Therefore, to ensure user experience and further ensure the accuracy of summary extraction, this application provides a display method that supports modification of the first text and the search term. When the user wants to modify the search term, the method may be implemented as steps shown in FIG. 20.

Step 2001: Determine a target keyword in response to a selection operation on a search result.

Step 2002: Update a search term based on the target keyword to obtain an updated search term.

Step 2003: Obtain an updated search result based on the updated search term, where the updated search result includes a summary of at least one webpage, the summary of each webpage is extracted from a body text of the webpage based on the updated search term and a second text, the second text is generated based on the updated search term, and the second text is a text associated with the updated search term.

Step 2004: Display the updated search result in a second interface.

For example, as shown in FIG. 15, when a user taps on "first gold" in the summary, the target keyword is determined to be "first gold", and "first gold" is used to replace "The first Olympic gold medalist in China", and the updated search result is obtained for display.

In some possible embodiments, the user may consider that the first text is inaccurate. Therefore, in this application, to ensure user experience and further ensure accuracy of the search, after the first text is displayed in a display interface, steps shown in FIG. 21 may be implemented to perform the secondary search based on the first text modified by the user.

Step 2101: Obtain a modified first text in response to a modification operation on a first text.

Step 2102: Obtain an updated search result based on a search term and the modified first text, where the updated search result includes a summary of at least one webpage, and the summary of each webpage is extracted from a body text of the webpage based on the search term and the modified first text.

Step 2103: Display the updated search result in a second interface.

For example, as shown in FIG. 16, the first text is "The first Olympic gold medalist in China is Xu Haifeng. At the 1984 Los Angeles Olympics, Xu Haifeng won the men's XX championship, becoming the first gold medalist of that Games, and also the first Olympic champion in China, marking a breakthrough from China's previous record of having won no gold medals in its Olympic history". The user modifies the first text to "The first Olympic gold medalist in China is Xu Haifeng. Introduction to Xu Haifeng's life". Then, based on the search term "The first Olympic gold medalist in China" and the modified text "The first Olympic gold medalist in China is Xu Haifeng. Introduction to Xu Haifeng's life", the step of separately performing word segmentation on the search term and the first text is performed.

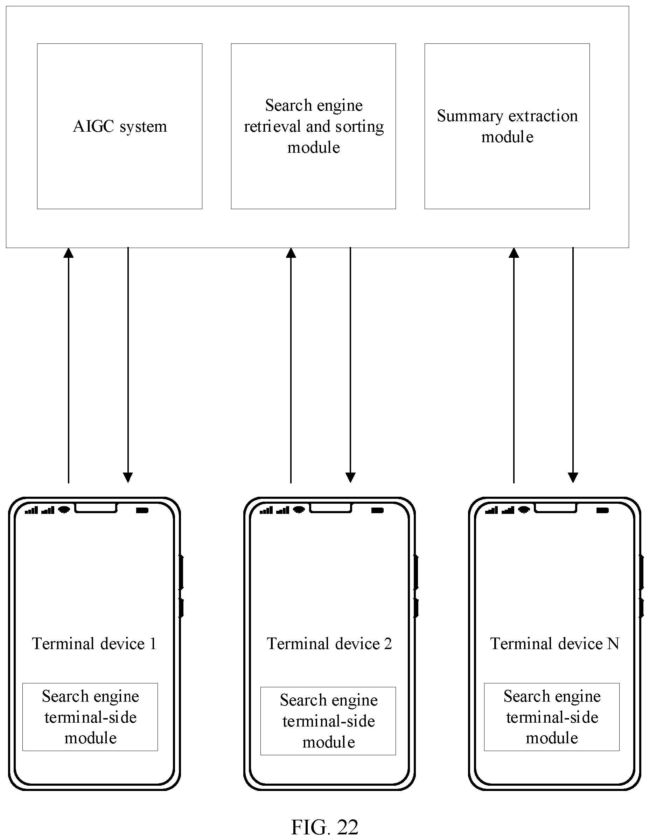

The following describes a search system framework corresponding to the search result generation method provided in this embodiment of this application. The search system framework in this application includes: one or more cloud servers and a plurality of terminal devices. The cloud server includes an AIGC system, a search engine retrieval and sorting module, and a summary extraction module. The terminal device includes a search engine terminal-side module, as shown in FIG. 22.

Cloud server: The cloud server provides cloud services for various applications, and provides AIGC system, search engine retrieval and sorting, and summary extraction services to terminal devices through network requests to service interfaces.

Terminal device 1 (a terminal device such as a mobile phone, a tablet, a watch, and a computer) on which an APP of a search engine is installed: A user interacts with the terminal device to use functions such as searching, viewing a search result, and performing a secondary search.

Terminal device 2 (a terminal device such as a mobile phone, a tablet, a watch, and a computer) on which an APP of a search engine is installed: A user interacts with the terminal device to use functions such as searching, viewing a search result, and performing a secondary search.

Terminal device N (a terminal device such as a mobile phone, a tablet, a watch, and a computer) on which an APP of a search engine is installed: A user interacts with the terminal device to use functions such as searching, viewing a search result, and performing a secondary search.

AIGC system: The AIGC system provides an AIGC service, and generates a corresponding first text based on an entered search term.

Search engine retrieval and sorting module: The search engine retrieval and sorting module performs retrieval and sorting based on an entered search term to obtain related webpages.

Summary extraction module: The summary extraction module computes a summary corresponding to each webpage based on an entered search term.

Search engine terminal-side module: The search engine terminal-side module displays search results obtained from a cloud side and summary information thereof, and allows a user to interact with keywords in a first text and/or a summary.

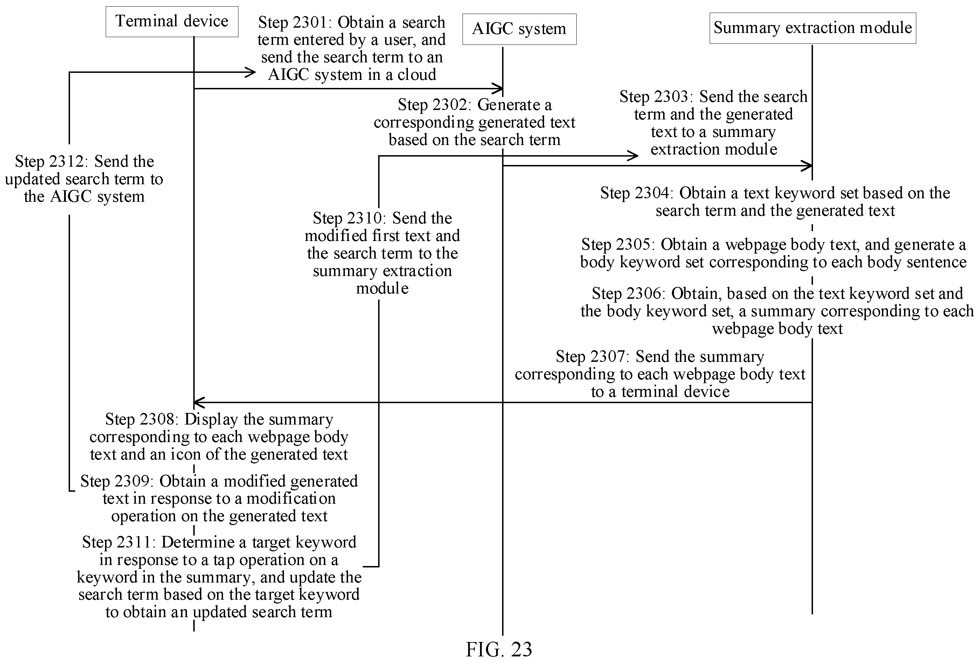

The following describes the search result generation method provided in this application with reference to the search system, as shown in FIG. 23.

Step 2301: A terminal device obtains a search term entered by a user, and sends the search term to an AIGC system in a cloud.

Step 2302: The AIGC system generates a corresponding first text based on the search term.

Step 2303: The AIGC system sends the search term and the first text to a summary extraction module.

Step 2304: The summary extraction module obtains a text keyword set based on the search term and the first text.

Step 2305: The summary extraction module obtains a webpage, and generates a body keyword set corresponding to each body sentence.

Step 2306: Obtain, based on the text keyword set and the body keyword set, a summary corresponding to each webpage.

Step 2307: Send the summary corresponding to each webpage to the terminal device.

Step 2308: The terminal device displays the summary corresponding to each webpage and an icon of the first text.

Step 2309: Obtain a modified first text in response to a modification operation on the first text.

Step 2310: Send the modified first text and the search term to the summary extraction module.

Step 2311: Determine a target keyword in response to a tap operation on a keyword in the summary, and update the search term based on the target keyword to obtain an updated search term.

Step 2312: Send the updated search term to the AIGC system.

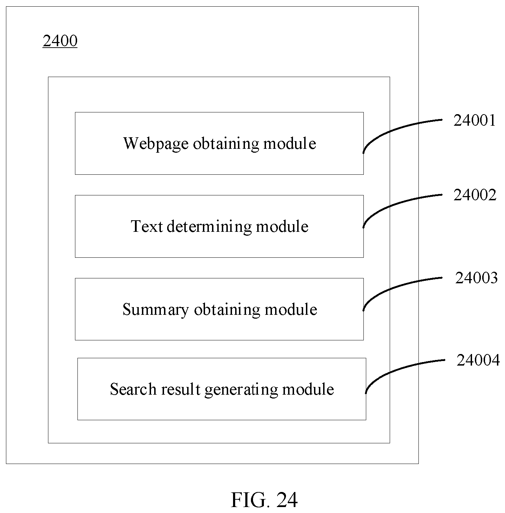

Based on a same inventive concept, after the search result generation method provided in embodiments of this application is described, as shown in FIG. 24, the following describes a search result generation apparatus 2400 provided in an embodiment of this application. The apparatus includes:
a webpage obtaining module 24001, configured to obtain at least one webpage corresponding to a search term;
a text determining module 24002, configured to generate a first text corresponding to the search term, where the first text is a text associated with the search term;
a summary obtaining module 24003, configured to extract, for each webpage, a summary of the webpage from a body text of the webpage based on the search term and the first text; and
a search result generating module 24004, configured to generate a search result of the search term based on the summary of the webpage.

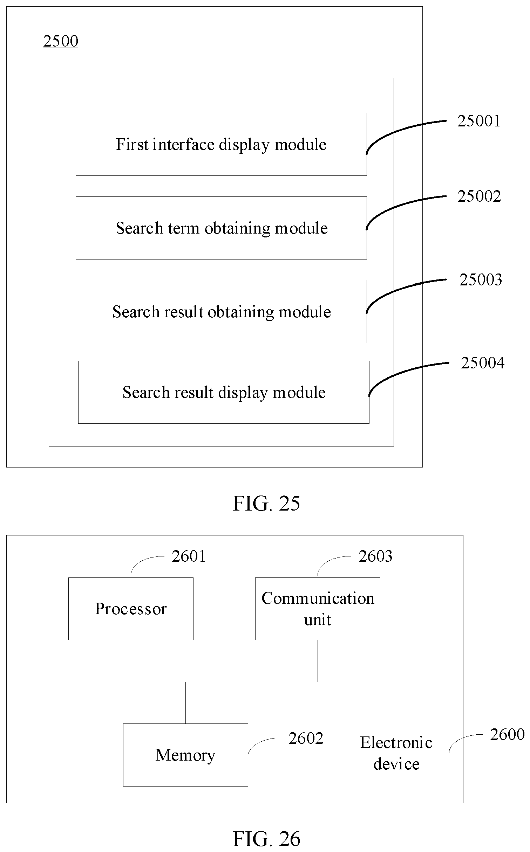

Based on a same inventive concept, after the display method provided in embodiments of this application is described, as shown in FIG. 25, the following describes a display apparatus 2500 provided in an embodiment of this application. The apparatus includes:
a first interface display module 25001, configured to display a first interface, where the first interface includes a first control;
a search term obtaining module 25002, configured to obtain a search term entered by a user in the first control;
a search result obtaining module 25003, configured to obtain a search result based on the search term, where the search result includes a summary of at least one webpage, the summary of each webpage is extracted from a body text of the webpage based on the search term and a first text, the first text is generated based on the search term, and the first text is a text associated with the search term; and
a search result display module 25004, configured to display the search result in a second interface.

In correspondence to the foregoing embodiments, this application further provides an electronic device. FIG. 26 is a diagram of a structure of an electronic device according to an embodiment of the present invention. An electronic device 2600 may include a processor 2601, a memory 2602, and a communication unit 2603. These components communicate with each other through one or more buses. A person skilled in the art may understand that a structure of the electronic device shown in the figure does not constitute a limitation on embodiments of the present invention. The structure may be a bus structure, or may be a star structure, or may further include more or fewer components than those shown in the figure, or combine some components, or have different component arrangements.

The communication unit 2603 is configured to establish a communication channel, so that the electronic device can communicate with another device, receive user data sent by the another device or send user data to the another device.

The processor 2601 is a control center of the electronic device, connects to various parts of the entire electronic device through various interfaces and lines, and performs various functions of the electronic device and/or data processing by running or executing a software program and/or a module stored in the memory 2602 and invoking data stored in the memory. The processor may include an integrated circuit (integrated circuit, IC), for example, may include a single packaged IC, or may include a plurality of connected packaged ICs with a same function or different functions. For example, the processor 2601 may include only a central processing unit (central processing unit, CPU). In this implementation of the present invention, the CPU may be a single computing core, or may include a plurality of computing cores.

The memory 2602 is configured to store execution instructions of the processor 2601. The memory 2602 may be implemented by any type of a volatile or nonvolatile storage device or a combination thereof, for example, a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disc.

When the execution instructions in the memory 2602 are executed by the processor 2601, the electronic device 2600 can perform some or all of the steps in the embodiment shown in FIG. 2.

During specific implementation, the present invention further provides a computer storage medium. The computer storage medium may store a program, and when the program is executed, some or all of the steps of each embodiment of the search result generation method provided in the present invention may be included. The storage medium may be a magnetic disk, an optical disc, a read-only memory (read-only memory, ROM), a random access memory (random access memory, RAM), or the like.

A person skilled in the art may clearly understand that, the technologies in embodiments of the present invention may be implemented by software in addition to a necessary general hardware platform. Based on such an understanding, the technical solutions of the present invention essentially or the part contributing to the conventional technology may be implemented in a form of a software product. The software product is stored in a storage medium, such as a ROM/RAM, a magnetic disk, or an optical disc, and includes several instructions for instructing a computer device (which may be a personal computer, a server, or a network device) to perform the methods described in embodiments or some parts of embodiments of the present invention.

For same or similar parts of embodiments of this specification, refer to each other. Especially, apparatus and terminal embodiments are basically similar to a method embodiment, and therefore are described briefly. For related parts, refer to partial descriptions in the method embodiment.

## Claims

1. A search result generation method, wherein the method comprises:
obtaining at least one webpage corresponding to a search term;
generating a first text corresponding to the search term, wherein the first text is a text associated with the search term;
for each webpage, extracting a summary of the webpage from a body text of the webpage based on the search term and the first text; and
generating a search result of the search term based on the summary of the webpage.

2. The method according to claim 1, wherein the extracting the summary of the webpage from the body text of the webpage based on the search term and the first text comprises:
separately performing word segmentation on the search term and the first text to obtain a text keyword set, wherein the text keyword set comprises at least one keyword and a weight corresponding to each keyword;
performing sentence segmentation on the body text of the webpage to obtain at least one body sentence; and
determining the summary of the webpage based on a correlation between each body sentence and the keyword in the text keyword set.

3. The method according to claim 2, wherein the determining the summary of the webpage based on the correlation between each body sentence and the keyword in the text keyword set comprises:
performing word segmentation on each body sentence to obtain a body keyword set corresponding to each body sentence, wherein the body keyword set comprises at least one keyword and a weight corresponding to each keyword;
obtaining a correlation score between each body sentence and the search term based on the text keyword set and the body keyword set corresponding to each body sentence; and
obtaining the summary corresponding to the webpage based on the correlation score corresponding to each body sentence.

4. The method according to claim 2, wherein the separately performing word segmentation on the search term and the first text to obtain the text keyword set comprises:
performing word segmentation on the search term to obtain at least one first keyword and a weight corresponding to each first keyword;
performing word segmentation on the first text to obtain at least one second keyword and a weight corresponding to each second keyword; and
obtaining the text keyword set based on the first keyword, the weight corresponding to each first keyword, the second keyword, and the weight corresponding to the second keyword.

5. The method according to claim 2, wherein before the determining the summary of the webpage based on the correlation between each body sentence and the keyword in the text keyword set, the method further comprises:
performing deduplication processing on the text keyword set to obtain a deduplicated text keyword set.

6. The method according to claim 2, wherein before the determining the summary of the webpage based on the correlation between each body sentence and the keyword in the text keyword set, the method further comprises:
performing normalization processing on the weight of the keyword in the text keyword set.

7. The method according to claim 6, wherein the performing normalization processing on the weight of the keyword in the text keyword set comprises:
performing, based on a preset weight ratio corresponding to the first keyword, normalization processing on a third keyword in the text keyword set to obtain a normalized weight corresponding to each third keyword in the text keyword set, wherein the third keyword is a keyword corresponding to the search term in the text keyword set;
performing, based on a preset weight ratio corresponding to the second keyword, normalization processing on a fourth keyword comprised in the text keyword set to obtain a normalized weight corresponding to each fourth keyword in the text keyword set, wherein the fourth keyword is a keyword in the text keyword set other than the third keyword;
using the normalized weight corresponding to each third keyword to update a weight corresponding to each third keyword in the text keyword set; and
using the normalized weight corresponding to each fourth keyword to update a weight corresponding to each fourth keyword in the text keyword set.

8. The method according to claim 7, wherein the performing, based on the preset weight ratio corresponding to the first keyword, normalization processing on the third keyword in the text keyword set comprises:
performing normalization processing on the third keyword in the text keyword set based on the preset weight ratio corresponding to the first keyword and a first normalization formula, wherein
the first normalization formula comprises: ${qw}_{i}^{′} = α ∗ \left(\frac{{qw}_{i}}{{\sum }_{1}^{m} {qw}_{i}}\right)$,
wherein ${qw}_{i}^{′}$ is a normalized weight of an *i*^{th} third keyword in the text keyword set, α is the preset weight ratio corresponding to the first keyword, *qwᵢ* is a weight corresponding to the *i*^{th} third keyword in the text keyword set, and *m* is a quantity of third keywords in the text keyword set.

9. The method according to claim 7, wherein the performing, based on the preset weight ratio corresponding to the second keyword, normalization processing on the fourth keyword comprised in the text keyword set comprises:
performing normalization processing on the fourth keyword in the text keyword set based on the preset weight ratio corresponding to the second keyword and a second normalization formula, wherein
the second normalization formula comprises: ${tw}_{i}^{′} = \left(1-α\right) ∗ \left(\frac{{tw}_{i}}{{\sum }_{1}^{n} {tw}_{i}}\right)$,
wherein ${tw}_{i}^{′}$ is a normalized weight of an *i*^{th} fourth keyword in the text keyword set, 1 - α is the preset weight ratio corresponding to the second keyword, *twᵢ* is a weight corresponding to the *i*^{th} fourth keyword in the text keyword set, and *n* is a quantity of fourth keywords in the text keyword set.

10. The method according to claim 3, wherein the obtaining the correlation score between each body sentence and the search term based on the text keyword set and the body keyword set corresponding to each body sentence comprises:
for the body keyword set corresponding to each body sentence, performing:
determining a quantity of same keywords between the body keyword set and the text keyword set; and
obtaining, based on the quantity of same keywords, the correlation score between the body sentence corresponding to the body keyword set and the search term.

11. The method according to claim 10, wherein the obtaining, based on the quantity of same keywords, the correlation score between the body sentence corresponding to the body keyword set and the search term comprises:
obtaining, based on the quantity of same keywords and a correlation formula, the correlation score between the body sentence corresponding to the body keyword set and the search term, wherein
the correlation formula comprises: ${revelance}_{s} = {\sum }_{1}^{l} {m}_{i} ∗ {s}_{i}$,
wherein revelance*ₛ* is the correlation score between the body sentence corresponding to the body keyword set and the search term, *l* is the quantity of same keywords between the body keyword set and the text keyword set, *mᵢ* is a weight of an *i*^{th} keyword in the text keyword set, and *sᵢ* is a weight of an *i*^{th} keyword in the body keyword set.

12. The method according to claim 2, wherein before the generating the search result of the search term based on the summary of the webpage, the method further comprises:
determining, based on the text keyword set, a first keyword and a second keyword in the summary of the webpage, wherein the first keyword is a keyword obtained by performing word segmentation on the search term, and the second keyword is a keyword obtained by performing word segmentation on the first text; and
sending the first keyword and the second keyword in the summary of the webpage to a terminal device.

13. The method according to claim 1, wherein the method further comprises:
determining a target keyword in response to a selection operation on the search result;
updating the search term based on the target keyword to obtain an updated search term; and
based on the updated search term, returning to perform the step of obtaining at least one webpage corresponding to the search term.

14. The method according to claim 1, wherein the method further comprises:
obtaining a modified first text in response to a modification operation on the first text; and
based on the modified first text, returning to perform the step of extracting the summary of the webpage from the body text of the webpage based on the search term and the first text.

15. The method according to claim 1, wherein the generating the first text corresponding to the search term comprises:
entering the search term into an artificial intelligence generated content AIGC system, and obtaining the first text output by the AIGC system.

16. A display method, wherein the method comprises:
displaying a first interface, wherein the first interface comprises a first control;
obtaining a search term entered by a user in the first control;
obtaining a search result based on the search term, wherein the search result comprises a summary of at least one webpage, the summary of each webpage is extracted from a body text of the webpage based on the search term and a first text, the first text is generated based on the search term, and the first text is a text associated with the search term; and
displaying the search result in a second interface.

17. The method according to claim 16, wherein the method further comprises:
displaying a second control in the second interface; and
detecting a selection operation on the second control and displaying the first text in a third interface.

18. The method according to claim 17, wherein after the displaying the first text in the third interface, the method further comprises:
obtaining a modified first text in response to a modification operation on the first text;
obtaining an updated search result based on the search term and the modified first text, wherein the updated search result comprises a summary of at least one webpage, and the summary of each webpage is extracted from a body text of the webpage based on the search term and the modified first text; and
displaying the updated search result in the second interface.

19. The method according to claim 16, wherein the displaying the search result in the second interface comprises:
performing, in the second interface, first emphasis display on a first keyword in the summary corresponding to each webpage, and performing second emphasis display on a second keyword in the summary corresponding to each webpage, wherein the first keyword is a keyword obtained by performing word segmentation on the search term, and the second keyword is a keyword obtained by performing word segmentation on the first text.

20. The method according to claim 19, wherein the first emphasis display comprises: displaying in red, highlighting, displaying with a bottom wavy line, and/or displaying in bold; the second emphasis display comprises: displaying in red, highlighting, displaying with a bottom wavy line, and/or displaying in bold; and the first emphasis display is different from the second emphasis display.

21. The method according to claim 16, wherein the method further comprises:
determining a target keyword in response to a selection operation on the search result;
updating the search term based on the target keyword to obtain an updated search term; and
obtaining an updated search result based on the updated search term, wherein the updated search result comprises a summary of at least one webpage, the summary of each webpage is extracted from a body text of the webpage based on the updated search term and a second text, the second text is generated based on the updated search term, and the second text is a text associated with the updated search term; and
displaying the updated search result in the second interface.

22. A search result generation apparatus, wherein the apparatus comprises:
a webpage obtaining module, configured to obtain at least one webpage corresponding to a search term;
a text determining module, configured to generate a first text corresponding to the search term, wherein the first text is a text associated with the search term;
a summary obtaining module, configured to extract, for each webpage, a summary of the webpage from a body text of the webpage based on the search term and the first text; and
a search result generating module, configured to generate a search result of the search term based on the summary of the webpage.

23. A display apparatus, wherein the apparatus comprises:
a first interface display module, configured to display a first interface, wherein the first interface comprises a first control;
a search term obtaining module, configured to obtain a search term entered by a user in the first control;
a search result obtaining module, configured to obtain a search result based on the search term, wherein the search result comprises a summary of at least one webpage, the summary of each webpage is extracted from a body text of the webpage based on the search term and a first text, the first text is generated based on the search term, and the first text is a text associated with the search term; and
a search result display module, configured to display the search result in a second interface.

24. An electronic device, comprising a memory configured to store computer program instructions and a processor configured to execute the program instructions, wherein when the computer program instructions are executed by the processor, the electronic device is enabled to perform the method according to any one of claims 1 to 15, and claims 16 to 21.

25. A computer-readable storage medium, wherein the computer-readable storage medium comprises a stored program, and when the program runs, a device in which the computer-readable storage medium is located is controlled to perform the method according to any one of claims 1 to 15, and claims 16 to 21.
